# EUROPEAN PATENT APPLICATION

(11) **EP 4 307 649 A1**
(43) Date of publication of application: **17.01.2024**
(21) Application number: 22790982.7
(22) Date of filing: 16.04.2022
(51) Int. Cl.: H04M 1/72451, G06F 3/0483

(54) **NOTIFICATION METHOD AND RELATED APPARATUS**

(30) Priority: 19.04.2021 CN 202110421746; 18.05.2021 CN 202110539628
(71) Applicant: Huawei Technologies Co., Ltd., Longgang Shenzhen, Guangdong 518129 (CN)
(72) Inventor: CAI, Wendi, Shenzhen, Guangdong 518129 (CN); PEI, Feiyue, Shenzhen, Guangdong 518129 (CN); QUE, Jiaxiong, Shenzhen, Guangdong 518129 (CN)
(74) Representative: Körber, Martin Hans
(86) International application number: PCT/CN2022/087252
(87) International publication number: WO 2022/222874

(57) **Abstract**

This application provides a notification method and a related apparatus. In the method, an electronic device may obtain schedule event information by using Calendar (calendar) or Alarm clock (clock), and display a reminder item of a schedule event on a display; and may further, in response to a user operation on a control in the reminder item, start an associated application of the schedule event, and perform an associated operation of the schedule event. In this way, a user can be reminded of the to-be-executed schedule event in the reminder item, and can directly start the associated application of the schedule event and perform the corresponding operation by using the control in the reminder item. The user does not need to switch between a plurality of applications, which is convenient, and can quickly and conveniently meet an actual requirement of the user and improve experience of using the electronic device by the user.

## Description

This application claims priorities to Chinese Patent Application No. 202110421746.X, filed with the China National Intellectual Property Administration on April 19, 2021 and entitled "CALENDAR USING METHOD", and Chinese Patent Application No. 202110539628.9, filed with the China National Intellectual Property Administration on May 18, 2021 and entitled "NOTIFICATION METHOD AND RELATED APPARATUS", which are incorporated herein by reference in their entireties.

### TECHNICAL FIELD

This application relates to the field of terminal technologies, and in particular, to a notification method and a related apparatus.

### BACKGROUND

With popularization of intelligent mobile terminals, users are increasingly dependent on the mobile terminals. Currently, many users each add a schedule event on a "Calendar (calendar)" application (application, APP) on a mobile terminal, so that the mobile terminal can prompt the user through a ring tone or a text or in a like manner before the schedule event starts.

After seeing the schedule event prompted by the mobile terminal, the user usually performs a series of operations on the mobile terminal, for example, starting an online conference, shopping, watching a movie, and navigation. In this case, the user needs to exit Calendar (calendar) on the mobile terminal, start an application for performing the operation, and then perform the operation. The user needs to continuously switch between Calendar (calendar) and another application. The operation is complex and user experience is poor.

### SUMMARY

This application provides a notification method and a related apparatus, to directly start an associated application of a schedule event and perform a corresponding operation by using a control in a reminder item. This can quickly and conveniently meet an actual requirement of a user, and improve experience of using an electronic device by the user.

According to a first aspect, an embodiment of this application provides a notification method. The method is applied to an electronic device having a display, and the method includes: The electronic device obtains schedule event information of one or more schedule events in a process of running Calendar or Alarm clock, where the schedule event information includes execution time of the schedule event and further includes a first associated application and/or a first associated operation, and the first associated application or the first associated operation is preset. The electronic device displays a reminder item of the schedule event on the display, where the reminder item includes a part or all of the schedule event information and a first control. The electronic device receives a first operation performed on the first control. In response to the first operation, the electronic device runs the first associated application, and performs the first associated operation.

According to the method provided in the first aspect, a user can be reminded of the to-be-executed schedule event by using the schedule event information in the reminder item, and can directly start the associated application of the schedule event and perform the corresponding operation by using the control in the reminder item. The user does not need to switch between a plurality of applications, which is convenient, and can quickly and conveniently meet an actual requirement of the user and improve experience of using the electronic device by the user.

With reference to the first aspect, Calendar (calendar) in this embodiment of this application is an application installed on the electronic device, and is to record a year, a month, a day, a week, a solar term, and a special day (for example, a holiday), and is to add the schedule event. Calendar supports the electronic device in obtaining one or more pieces of schedule event information and displaying the reminder item of the schedule event, and in response to the user operation received on the control included in the reminder item of the schedule event, starting the associated application of the schedule event, and performing the associated operation of the schedule event.

Alarm clock (clock) in this embodiment of this application is an application for indicating time and sending a sound signal, a vibration signal, or another signal at a moment set by the user. Alarm clock may support the electronic device in making a sound or another signal at reminder time of the schedule event, displaying the reminder item of the schedule event, and in response to the user operation received on the control included in the reminder item of the schedule event, starting the associated application of the schedule event, and performing the associated operation of the schedule event.

With reference to the first aspect, in some implementations, a schedule event status is a first state, and the schedule event information further includes a second associated application and/or a second associated operation. After the electronic device displays a reminder item of the schedule event on the display, the method further includes: When detecting that the schedule event status is changed from the first state to a second state, the electronic device changes the first control in the reminder item to a second control. The electronic device receives a second operation performed on the second control. In response to the second operation, the electronic device runs the second associated application, and performs the second associated operation.

In the implementation, the electronic device can display the reminder item of the schedule event on the display within the reminder time of the schedule event, and the electronic device can display different controls in the reminder item at different moments within the reminder time. In this way, the electronic device can refresh, based on an actual requirement of the user, the control displayed in the reminder item, and quickly and conveniently start different applications at different time and perform different operations, thereby meeting the actual requirement of the user.

With reference to the first aspect, in some implementations, the electronic device displays, on the display, a first user interface provided by Calendar, where the first user interface displays a calendar and the reminder item of the schedule event whose execution time is on a first date. In this way, the user can view the schedule event executed on a specific date in the user interface provided by Calendar.

With reference to the first aspect, in some implementations, the electronic device displays the reminder item of the schedule event in any one of a notification bar, a card, a leftmost screen, or a pop-up window on the display. In some implementations, when the reminder time arrives, the electronic device displays the reminder item of the schedule event in any one of the notification bar, the card, the leftmost screen, or the pop-up window on the display. The reminder time is reminder time respectively corresponding to the notification bar, the card, the leftmost screen, or the pop-up window, and the reminder time respectively corresponding to the notification bar, the card, the leftmost screen, or the pop-up window may be different. In this implementation, the electronic device can display the reminder item of the schedule event in different forms, and the user can directly start the application and perform the corresponding operation by using the reminder item in a plurality of different forms.

With reference to the implementation, the electronic device can display the reminder item of the schedule event in any one of the notification bar, the card, the leftmost screen, or the pop-up window on the display in split screen, in full screen, or in a floating window.

With reference to the first aspect, in some implementations, the electronic device first displays the part or all of the schedule event information on the display, and then displays the first control on the display. In this way, the notification method provided in this embodiment of this application can be displayed more flexibly.

With reference to the first aspect, in some implementations, the electronic device obtains the schedule event information of the one or more schedule events in the process of running Alarm clock. The electronic device may further output a sound signal or a vibration signal when displaying the reminder item of the schedule event on the display.

With reference to the first aspect, in some implementations, there may be one or more first associated applications. In some implementations, if there are a plurality of first associated applications, after receiving the first operation performed on the first control, the electronic device may display, in split screen, user interfaces separately provided by the plurality of associated applications.

With reference to the first aspect, in some implementations, the first control may be implemented as, for example, a text, a button, or an icon like an icon of an associated application. This is not limited herein.

With reference to the first aspect, in some implementations, before obtaining schedule event information of one or more schedule events in a process of running Calendar or Alarm clock, the electronic device may display, on the display, a second user interface provided by a source application; and receive the part or all of the input schedule event information in the second user interface. In other words, the user may add the schedule event to the source application.

With reference to the first aspect, in some implementations, before displaying a reminder item of the schedule event on the display, the electronic device may receive a third operation for enabling a first service; and enables the first service in response to the third operation. In another implementation, the electronic device may further enable the first service by default. The first service is used by the electronic device to run the first associated application by using the reminder item, and the first associated operation is performed.

With reference to the first aspect, in some implementations, the schedule event information further includes one or more of the following: an identifier, a name, a type, duration, a place, a participant, the source application, the schedule event status, or the reminder time of the schedule event.

The type of the schedule event may include a conference schedule event (including a voice conference and a video conference), a travel schedule event (including a local trip, a cross-city trip, and the like), a shopping schedule event, an online movie watching schedule event, an online learning schedule event, a medical treatment schedule event, a meal schedule event, a medicine taking schedule event, a party schedule event, a fitness schedule event, a work schedule event, an exam schedule event, an activity schedule event, a game schedule event, a message reply schedule event, and the like.

The reminder time is a time period in which the electronic device reminds the user of the schedule event, and includes a start moment and/or an end moment. When the electronic device reminds the schedule event in different manners (for example, a notification bar, a desktop card, or a leftmost screen), corresponding reminder time may be different.

The schedule event status includes: before the schedule event, during the schedule event, and after the schedule event.

With reference to the first aspect, in some implementations, that in response to the first operation, the electronic device runs the first associated application, and performs the first associated operation specifically includes: In response to the first operation, the electronic device displays, in split screen or in a floating window, user interfaces provided by a plurality of first associated applications, and performs the first associated operation.

With reference to the first aspect, in some implementations, the type of the schedule event, the first associated application, and the first associated operation are respectively:
a conference schedule event, an online conference application, and joining the conference;
a conference schedule event, a mailbox, and documenting conference minutes;
a movie watching schedule event, a network video application, and playing the movie;
a movie watching schedule event, a movie review application, and writing a movie review; or
a travel schedule event, a navigation application, and navigation.

According to a second aspect, this application provides a notification method. The method is applied to a communication system, the communication system includes a first device and a second device having a display, and the method includes: The first device obtains schedule event information of one or more schedule events in a process of running Calendar or Alarm clock, where the schedule event information includes execution time of the schedule event and further includes a first associated application and/or a first associated operation, and the first associated application or the first associated operation is preset. The first device sends the schedule event information to the second device. The second device displays a reminder item of the schedule event on the display, where the reminder item includes a part or all of the schedule event information and a first control. The second device receives a first operation performed on the first control. In response to the first operation, the second device runs the first associated application, and performs the first associated operation; or in response to the first operation, the second device sends a notification message to a third device, where the notification message indicates the third device to run the first associated application and perform the first associated operation.

According to the method provided in the second aspect, the reminder item can be displayed across devices, and the first associated application can be started and the corresponding operation can be performed across devices. This is more convenient for a user, can quickly and conveniently meet an actual requirement of the user, and improve experience of using an electronic device by the user.

With reference to the second aspect, in some implementations, Calendar or Alarm clock may be installed on the second device, or Calendar or Alarm clock may not be installed on the second device.

With reference to the second aspect, in some implementations, in response to the first operation, the second device runs the first associated application, and performs the first associated operation. In some implementations, the second device may be a device that is filtered by the first device and on which an associated application is installed. In some other implementations, the second device may be the first device or a device selected by a user. If the first associated application is not installed on the second device, the second device may prompt the user to download and install the first associated application.

With reference to the second aspect, in some implementations, in response to the first operation, the second device sends the notification message to the third device, where the notification message indicates the third device to run the first associated application and perform the first associated operation. In some implementations, the third device may be a device that is filtered by the second device and on which an associated application is installed. In some other implementations, the third device may be the second device or a device selected by a user. If the first associated application is not installed on the third device, the third device may prompt the user to download and install the first associated application.

With reference to the second aspect, in some implementations, the third device may be the first device.

In the method provided in the second aspect, for a specific implementation of obtaining the schedule event information by the first device, refer to the specific implementation of obtaining the schedule event information by the electronic device in the first aspect.

In the method provided in the second aspect, for a manner in which the second device displays the reminder item of the schedule event on the display, refer to the manner in which the electronic device displays the reminder item in the first aspect.

According to a third aspect, this application provides a notification method. The method is applied to a communication system, the communication system includes a first device having a display and a second device, and the method includes: The first device obtains schedule event information of one or more schedule events in a process of running Calendar or Alarm clock, where the schedule event information includes execution time of the schedule event and further includes a first associated application and/or a first associated operation, and the first associated application or the first associated operation is preset. The first device displays a reminder item of the schedule event on the display, where the reminder item includes a part or all of the schedule event information and a first control. The first device receives a first operation performed on the first control. The first device sends a notification message to the second device. In response to the notification message, the second device runs the first associated application and performs the first associated operation.

According to the method provided in the third aspect, the first associated application can be started and the corresponding operation can be performed across devices. This is more convenient for a user, can quickly and conveniently meet an actual requirement of the user, and improve experience of using an electronic device by the user.

With reference to the third aspect, in some implementations, Calendar or Alarm clock may be installed on the second device, or Calendar or Alarm clock may not be installed on the second device.

With reference to the third aspect, in some implementations, the second device may be a device that is filtered by the first device and on which an associated application is installed. In some other implementations, the second device may be the first device or a device selected by a user. If the first associated application is not installed on the second device, the second device may prompt the user to download and install the first associated application.

In the method provided in the third aspect, for a specific implementation of obtaining the schedule event information by the first device, refer to the specific implementation of obtaining the schedule event information by the electronic device in the first aspect. For a manner in which the first device displays the reminder item of the schedule event on the display, refer to the manner in which the electronic device displays the reminder item in the first aspect.

According to a fourth aspect, an embodiment of this application provides an electronic device, including a memory and one or more processors. The memory is coupled to one or more processors, the memory is configured to store computer program code, the computer program code includes computer instructions, and the one or more processors invoke the computer instructions, so that the electronic device performs the method according to any one of the first aspect or the implementations of the first aspect.

According to a fifth aspect, an embodiment of this application provides an electronic device, including a memory and one or more processors. The memory is coupled to one or more processors, the memory is configured to store computer program code, the computer program code includes computer instructions, and the one or more processors invoke the computer instructions, so that the electronic device performs the method according to any implementation performed on a first device side in the second aspect or the third aspect.

According to a sixth aspect, an embodiment of this application provides an electronic device, including a memory and one or more processors. The memory is coupled to one or more processors, the memory is configured to store computer program code, the computer program code includes computer instructions, and the one or more processors invoke the computer instructions, so that the electronic device performs the method according to any implementation performed on a second device side in the second aspect or the third aspect.

According to a seventh aspect, an embodiment of this application provides a computer-readable storage medium, including instructions. When the instructions are run on an electronic device, the electronic device is enabled to perform the method according to any one of the first aspect or the implementations of the first aspect.

According to an eighth aspect, an embodiment of this application provides a computer program product. When the computer program product runs on a computer, the computer is enabled to perform the method according to any one of the first aspect or the implementations of the first aspect.

According to a ninth aspect, an embodiment of this application provides a computer-readable storage medium, including instructions. When the instructions are run on an electronic device, the electronic device is enabled to perform the method on a first device side in the second aspect or the third aspect, or on a second device side in the second aspect or the third aspect.

According to a tenth aspect, an embodiment of this application provides a computer program product. When the computer program product runs on a computer, the computer is enabled to perform the method on a first device side in the second aspect or the third aspect, or on a second device side in the second aspect or the third aspect.

According to the technical solutions provided in this application, the electronic device can obtain the schedule event information of the one or more schedule events by using Calendar (calendar) or Alarm clock (clock), and can display the reminder item of the schedule event on the display, and can further receive the user operation performed on the control in the reminder item, start the associated application of the schedule event, and perform the associated operation of the schedule event. In this way, the user can be reminded of the to-be-executed schedule event by using the schedule event information in the reminder item, and can directly start the associated application of the schedule event and perform the corresponding operation by using the control in the reminder item. The user does not need to switch between the plurality of applications, which is convenient, and can quickly and conveniently meet the actual requirement of the user and improve experience of using the electronic device by the user.

### BRIEF DESCRIPTION OF DRAWINGS

FIG. 1 is a schematic diagram of a hardware structure of an electronic device according to an embodiment of this application;
FIG. 2 is a schematic diagram of a software structure of an electronic device according to an embodiment of this application;
FIG. 3A shows a user interface, on an electronic device 100, for displaying an installed application according to an embodiment of this application;
FIG. 3B is a user interface for enabling "One-click service launch" according to an embodiment of this application;
FIG. 4A to FIG. 4E show a group of user interfaces related when an electronic device 100 obtains schedule event information provided by a network video application;
FIG. 5A to FIG. 5D show a group of user interfaces related when an electronic device 100 obtains schedule event information provided by an online conference application;
FIG. 6A and FIG. 6B show a group of user interfaces related when an electronic device 100 obtains schedule event information provided by Calendar (calendar);
FIG. 7A to FIG. 7M show examples of user interfaces provided by an electronic device 100 when the electronic device 100 displays a reminder item of a schedule event by using Calendar (calendar);
FIG. 8A to FIG. 8I show examples of user interfaces displayed after an electronic device 100 receives a user operation performed on a control in a reminder item;
FIG. 9A to FIG. 9G show examples of a group of user interfaces related when an application is started and a corresponding operation is performed across devices;
FIG. 10 is a flowchart of a notification method according to an embodiment of this application; and
FIG. 11 is a structural diagram of a communication system according to an embodiment of this application.

### DESCRIPTION OF EMBODIMENTS

The technical solutions according to embodiments of this application are clearly and completely described below with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language like Java or an extensible markup language (extensible markup language, XML). The interface source code is parsed and rendered on an electronic device, and finally presented as content that can be identified by the user. The user interface is usually represented in a form of a graphical user interface (graphical user interface, GUI), and is a user interface that is related to a computer operation and that is displayed in a graphic manner. The user interface may be a visual interface element like a text, an icon, a button, a menu, a tab, a text box, a dialog box, a status bar, a navigation bar, or a widget that is displayed on a display of the electronic device.

Embodiments of this application provide a notification method. The method is applied to an electronic device on which Calendar (calendar) or Alarm clock (clock) application is installed.

In some embodiments of this application, the electronic device may obtain schedule event information of one or more schedule events by using Calendar (calendar) or Alarm clock (clock), and may display a reminder item of the schedule event on a display by using Calendar (calendar) or Alarm clock (clock). The reminder item of the schedule event includes a part or all of the schedule event information, and a control. Then, the electronic device may receive a user operation performed on the control, start an associated application of the schedule event, and perform an associated operation of the schedule event.

For example, if obtaining schedule event information of an online conference by using Calendar (calendar) or Alarm clock (clock), an electronic device may display the schedule event information and a control for starting the online conference. Then, the electronic device may receive a user operation performed on the control, and start an application that provides the online conference.

In some other embodiments of this application, after obtaining one or more pieces of schedule event information by using Calendar (calendar) or Alarm clock (clock), the electronic device may send the schedule event information to another electronic device connected to the electronic device, so that the another electronic device displays a reminder item of the schedule event on a display. The reminder item of the schedule event includes a part or all of the schedule event information, and a control. Then, the another electronic device may receive a user operation performed on the control, start an associated application of the schedule event, and perform an associated operation of the schedule event.

According to the notification method provided in embodiments of this application, a user can be reminded of the to-be-executed schedule event by using the schedule event information in the reminder item, and can directly start the associated application of the schedule event and perform the corresponding operation by using the control in the reminder item. The user does not need to switch between a plurality of applications, which is convenient, and can quickly and conveniently meet an actual requirement of the user and improve experience of using the electronic device by the user. Herein, for association management between the schedule event and the application, refer to detailed descriptions in subsequent method embodiments.

According to the notification method provided in embodiments of this application, by using the control in the reminder item, the corresponding application can be directly started and the corresponding operation can be performed on this device, or the corresponding application can be started and the corresponding operation can be performed across devices. This is more convenient for the user.

In the following embodiments of this application, Calendar (calendar) is an application installed on the electronic device, and is to record a year, a month, a day, a week, a solar term, and a special day (for example, a holiday), and is to add the schedule event. Calendar (calendar) may be a system application, or may be a third-party application. This is not limited herein. The system application is an application provided or developed by a manufacturer of the electronic device, and the third-party application is an application provided or developed by a manufacturer of a non-electronic device. The manufacturer of the electronic device may include a maker, a supplier, a provider, an operator, or the like of the electronic device. The maker may be a manufacturer that uses a self-made or purchased part and a raw material to manufacture the electronic device. The supplier may be a manufacturer that provides an entire machine, a raw material, or a part of the electronic device. The operator may be a manufacturer responsible for distribution of the electronic device.

The schedule event is a plan and arrangement for a specific time point or time period. The schedule event may also be referred to as an event, a transaction, a trip, or another name. This is not limited herein. The schedule event information includes execution time of the schedule event and an associated item. In some embodiments, the schedule event information may further include one or more of the following: an identifier, a name, a type, duration, a place, a participant, a source application, a schedule event status, or reminder time of the schedule event. For detailed content of the schedule event information, refer to detailed descriptions of subsequent method embodiments, and details are not described herein.

In embodiments of this application, the schedule event information obtained by the electronic device may be from Calendar (calendar) or Alarm clock (clock), or may be from another application. For example, a user may add a schedule event by using Calendar (calendar), Alarm clock (clock), or the another application. The another application may be a system application or a third-party application. The another application may be, for example, a shopping application, a network video application, a ticket booking application, or an online conference application.

In embodiments of this application, the electronic device may display the reminder item of the schedule event in different manners. For example, the electronic device may display the reminder item of the schedule event in a user interface, a notification bar, a desktop card, a recommendation card, a leftmost screen, or a pop-up window provided by Calendar (calendar) or Alarm clock (clock). For details, refer to detailed descriptions in a subsequent UI embodiment. For an implementation form of the reminder item of the schedule event, refer to detailed descriptions in subsequent embodiments. Details are not described herein again.

In embodiments of this application, the electronic device can display the reminder item of the schedule event on the display within the reminder time of the schedule event, and the electronic device can display different controls in the reminder item at different moments within the reminder time. In addition, after receiving the user operations on the different controls, the electronic device may start different applications and perform different operations. For example, if obtaining schedule event information of an online conference by using Calendar (calendar) or Alarm clock (clock), an electronic device may display, before the schedule event starts, the schedule event information and a control for starting the online conference, and display, after the schedule event ends, a control for documenting conference minutes. In other words, the electronic device can refresh, based on an actual requirement of the user, the control displayed in the reminder item, and quickly and conveniently start different applications at different time and perform different operations, thereby meeting the actual requirement of the user.

Herein, for a specific control displayed on the electronic device at a specific moment in the reminder time, refer to detailed descriptions in subsequent embodiments. Details are not described herein again.

Before the notification method is described in detail, the electronic device configured to implement the method is first described.

A specific type of the electronic device is not limited in embodiments of this application. For example, the electronic device may include a mobile phone, and may further include a tablet computer, a desktop computer, a laptop computer, a handheld computer, a notebook computer, a smart screen, a wearable device, an augmented reality (augmented reality, AR) device, a virtual reality (virtual reality, VR) device, an artificial intelligence (artificial intelligence, AI) device, telematics, a smart headset, and a game console, and may further include an internet of things (internet of things, IOT) device or a smart home device like a smart water heater, a smart lamp, a smart air conditioner, or a camera. This is not limited thereto. The electronic device may further include a non-portable terminal device like a laptop (laptop) computer having a touch-sensitive surface or a touch panel, or a desktop computer having a touch-sensitive surface or a touch panel.

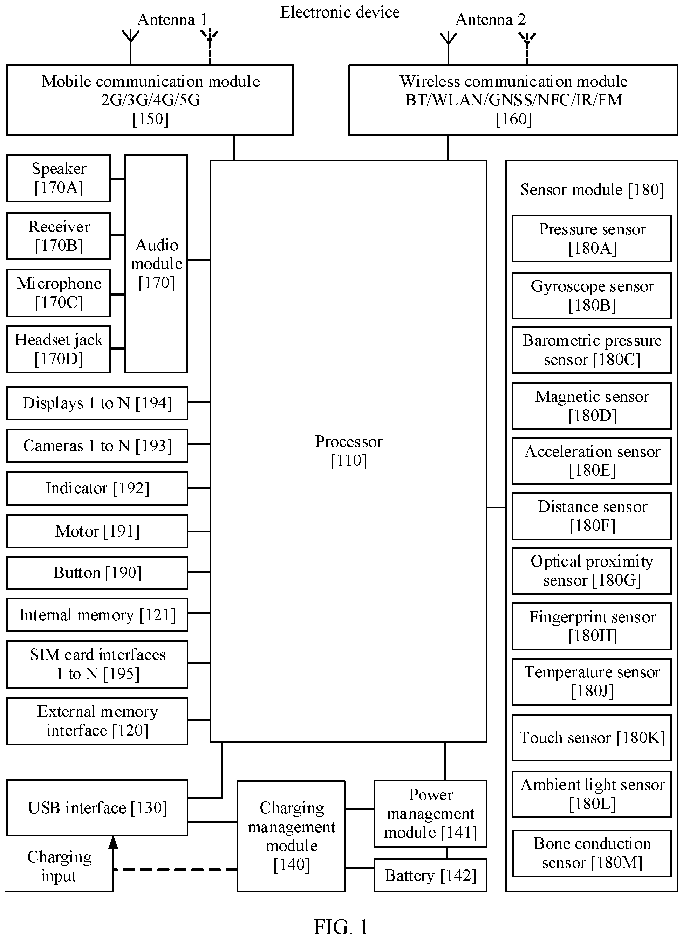

FIG. 1 is a schematic diagram of a structure of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 each are configured to transmit and receive electromagnetic wave signals. Each antenna in the electronic device 100 may be configured to cover one or more communication frequency bands. Different antennas may be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The NPU is a neural-network (neural-network, NN) computing processor, quickly processes input information by referring to a structure of a biological neural network, for example, by referring to a transmission mode between human brain neurons, and may further continuously perform self-learning. Applications such as intelligent cognition of the electronic device 100 may be implemented through the NPU, for example, image recognition, facial recognition, speech recognition, and text understanding.

The internal memory 121 may include one or more random access memories (random access memories, RAMs) and one or more nonvolatile memories (nonvolatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM is generally referred to as a DDR5 SDRAM), and the like. The nonvolatile memory may include a magnetic disk storage device, a flash memory (flash memory), and the like.

The flash memory may be classified, based on an operation principle, into an NOR flash, an NAND flash, a 3D NAND flash, and the like; may be classified, based on a quantity of electric potential levels of a cell, into a single-level cell (single-level cell, SLC), a multi-level cell

(multi-level cell, MLC), a triple-level cell (triple-level cell, TLC), a quad-level cell (quad-level cell, QLC), and the like; or may be classified, based on storage specifications, into a universal flash storage (English: universal flash storage, UFS), an embedded multimedia card (embedded multimedia Card, eMMC), and the like.

The random access memory may be directly read and written by using the processor 110. The random access memory may be configured to store an executable program (for example, machine instructions) in an operating system or another running program, and may be configured to store data of a user, data of an application, and the like.

The nonvolatile memory may also store an executable program, data of a user, data of an application, and the like, which may be loaded into the random access memory in advance for directly reading and writing by the processor 110.

The external memory interface 120 may be configured to connect to an external nonvolatile memory, to extend a storage capability of the electronic device 100. The external nonvolatile memory communicates with the processor 110 through the external memory interface 120, to implement a data storage function. For example, files such as music and videos are stored in the external nonvolatile memory.

The electronic device 100 may implement an audio function, for example, music playing and recording, through the audio module 170, the speaker 170A, the receiver 170B, the microphone 170C, the headset jack 170D, the application processor, and the like.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may also be disposed on a surface of the electronic device 100 at a location different from that of the display 194.

In this embodiment of this application, the processor 110 in the electronic device 100 is configured to obtain one or more pieces of schedule event information by using Calendar (calendar) or Alarm clock (clock). For a manner of obtaining the schedule event information by the processor 110, refer to detailed descriptions of subsequent method embodiments.

In some embodiments, the display 194 may be configured to display a reminder item of a schedule event, where the reminder item of the schedule event includes a part or all of the schedule event information and a control. Then, the display 194 may be configured to receive a user operation performed on the control, and the processor 110 is configured to: in response to the user operation, start an associated application of the schedule event and perform an associated operation of the schedule event; or the processor 110 is configured to: in response to the user operation, triggers another electronic device to start an associated application of the schedule event and perform an associated operation of the schedule event. For a form in which the display 194 displays the reminder item of the schedule event, refer to detailed descriptions in subsequent method embodiments.

In some other embodiments, the mobile communication module 150 or the wireless communication module 160 may be configured to send the schedule event information obtained by the processor 110 to another electronic device, for example, an electronic device 200, so that the another electronic device displays a reminder item of a schedule event on a display. The reminder item of the schedule event includes a part or all of the schedule event information, and a control. Then, the another electronic device may receive a user operation performed on the control, and directly start an associated application of the schedule event and perform an associated operation of the schedule event, or trigger another electronic device to start an associated application of the schedule event and perform an associated operation of the schedule event.

A software system of the electronic device 100 may use a layered architecture, an event-driven architecture, a microkernel architecture, a micro service architecture, or a cloud architecture. In an embodiment of this application, an Android system with a layered architecture is used as an example to describe the software structure of the electronic device 100.

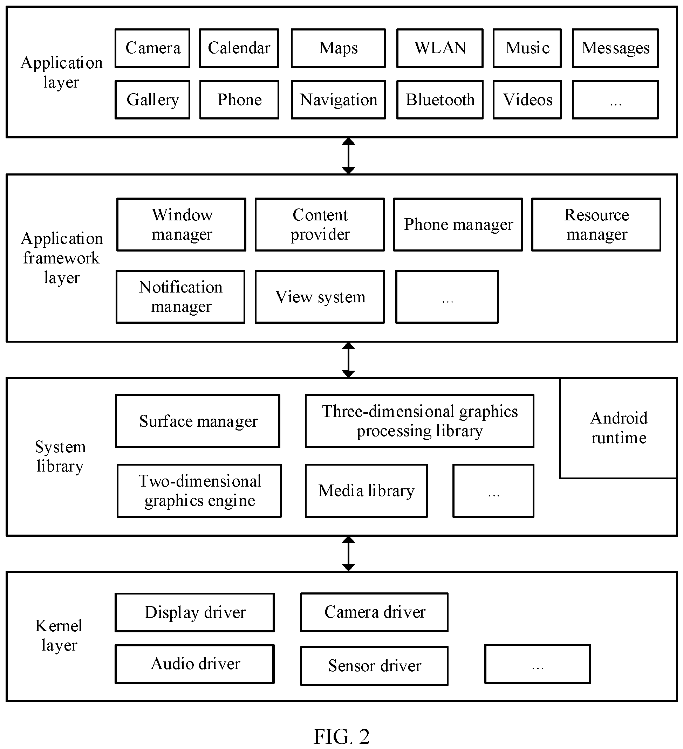

FIG. 2 is a block diagram of the software structure of the electronic device 100 in this embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application package may include applications such as Calendar (calendar), Alarm clock (clock), an input method application, a shopping application, a network video application, a ticket booking application, an online conference application, Camera, Gallery, Phone, Maps, Navigation, WLAN, Bluetooth, Music, Videos, and Messages.

Calendar (calendar) supports the electronic device 100 in obtaining one or more pieces of schedule event information. In some embodiments, Calendar (calendar) further supports the electronic device 100 in displaying a reminder item of a schedule event, and in response to a user operation received on a control included in the reminder item of the schedule event, starting an associated application of the schedule event and performing an associated operation of the schedule event. In some other embodiments, Calendar (calendar) further supports the electronic device 100 in sending the obtained schedule event information to another electronic device, for example, an electronic device 200.

Alarm clock (clock) is an application for indicating time and sending a sound signal, a vibration signal, or another signal at a moment set by a user. Alarm clock (clock) may also be referred to as a clock, an alarm, or another name.

In this embodiment of this application, Alarm clock may support the electronic device 100 in making a sound or another signal at reminder time of a schedule event, displaying a reminder item of the schedule event, and in response to a user operation received on a control included in the reminder item of the schedule event, starting an associated application of the schedule event and performing an associated operation of the schedule event. In some other embodiments, Alarm clock further supports the electronic device 100 in sending the obtained schedule event information to another electronic device, for example, an electronic device 200.

The input method application is used to provide an information (such as a text or an emoticon) input function, and may be a system application or a third-party application.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification message may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, an announcement is given, the electronic device vibrates, or an indicator light blinks.

The Android runtime includes a kernel library and a virtual machine. The Android runtime is responsible for scheduling and management of the Android system.

The kernel library includes two parts: a function that needs to be invoked in a Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The structure shown in this embodiment of this application does not constitute a specific limitation on the electronic device 100. In some other embodiments of this application, the electronic device 100 may include more or fewer modules than those shown in the figure.

A group of user interfaces provided in embodiments of this application is described below.

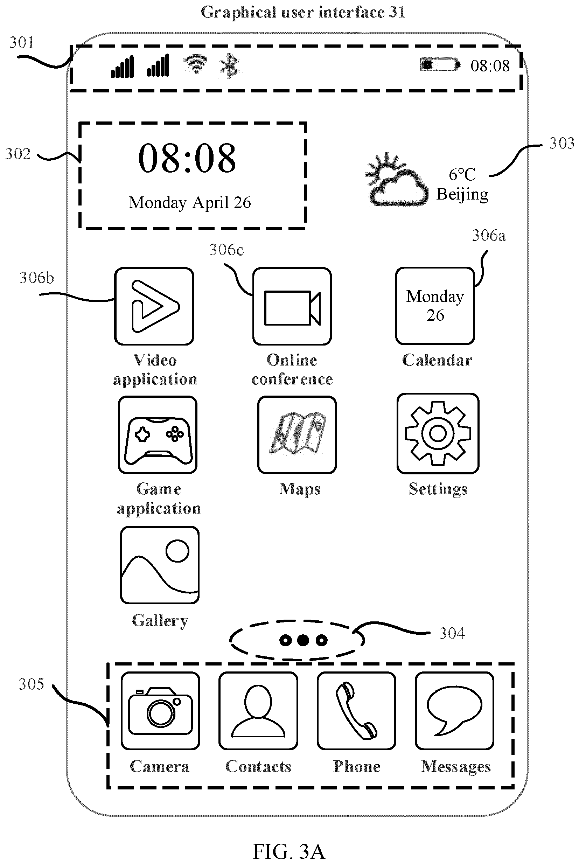

FIG. 3A shows an example of a user interface 31, on an electronic device 100, for displaying an installed application.

The user interface 31 displays a status bar 301, Calendar (calendar) and a time indicator 302, a weather indicator 303, a page indicator 304, a tray 305 having a commonly used application icon, and another application icon. The status bar 301 may include one or more signal strength indicators of a mobile communication signal (which may also be referred to as a cellular signal), a Bluetooth indicator, one or more signal strength indicators of a Wi-Fi signal, a battery status indicator, a time indicator, and the like.

Calendar (calendar) and the time indicator 302 are used to indicate a calendar (calendar) and current time. The weather indicator 303 is used to indicate weather.

The page indicator 304 may be used to indicate a specific page on which a user is browsing an application icon. In this embodiment of this application, application icons may be distributed on a plurality of pages, and the user may slide left or right to browse the application icons on different pages.

The tray 305 having the commonly used application icon may display a phone icon, a messages icon, a camera icon, a contacts icon, and the like.

The another application icon may include, for example, a Calendar (calendar) icon 306a, a video application icon 306b, an online conference application icon 306c, an alarm clock application icon 706d, a game application icon, a settings application icon, or a gallery application icon.

Calendar (calendar) is an application installed on the electronic device, and is to record a year, a month, a day, a week, a solar term, and a special day (for example, a holiday), and is to add a schedule event. Calendar (calendar) may be a system application or a third-party application.

Alarm clock (clock) is an application installed on the electronic device for indicating time and sending a sound signal, a vibration signal, or another signal at a moment set by a user.

A video application is a network video application.

The network video application is used to provide functions such as online watching and downloading of a network video.

An online conference application is an online meeting application. The online conference application is used to provide functions such as online conferences.

This is not limited thereto. More applications may be installed on the electronic device 100, and icons of these applications may be displayed on a display. For example, a shopping application, a ticket booking application, and the like may be installed on the electronic device 100. The shopping application may be used to purchase goods online. The ticket booking application may be used to order various tickets, such as an air ticket, a train ticket, and a ship ticket.

Names of the applications are merely words used in embodiments of this application, meanings represented by the names have been recorded in embodiments, and the names of the applications do not constitute any limitation on embodiments. For example, Calendar (calendar) may also be referred to as another noun, like a perpetual calendar.

This is not limited thereto. The user interface 31 shown in FIG. 3A may further include a navigation bar, a sidebar, and the like. In some embodiments, the example of the user interface 31 shown in FIG. 3A may be referred to as a home screen (home screen).

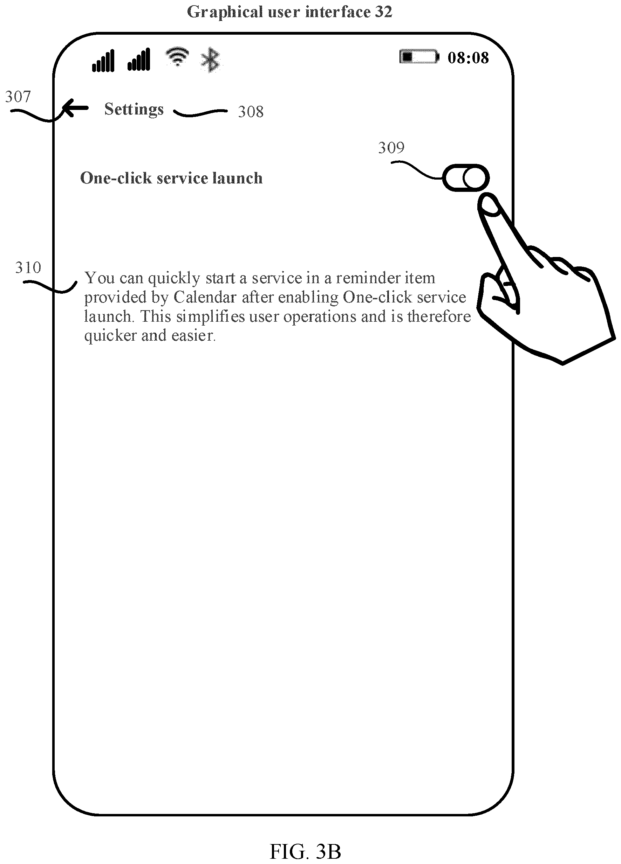

FIG. 3B shows a manner of enabling "One-click service launch" according to this embodiment of this application.

"One-click service launch" supports the electronic device 100 in performing the notification method provided in embodiments of this application. For details, refer to related descriptions in subsequent method embodiments.

In some embodiments, "One-click service launch" supports the electronic device 100 in displaying a part or all of schedule event information, and a control when displaying the reminder item of the schedule event on the display by using Calendar (calendar). In addition, the electronic device 100 may receive the user operation performed on the control, start the associated application of the schedule event, and perform the associated operation of the schedule event.

"One-click service launch" is merely a word used in embodiments of this application, a meaning represented by the word is recorded in embodiments, and a name of the word does not constitute any limitation on embodiments.

FIG. 3B shows an example of a user interface 32 provided by a settings (settings) application on the electronic device 100. The settings application is an application for setting various functions in the electronic device.

As shown in FIG. 3B, the user interface 32 displays a return button 307, a page indicator 308, a control 309 for enabling/disabling "One-click service launch", and prompt information 310.

The return button 307 is used to monitor a user operation, and the electronic device 100 may return, in response to the user operation, to display a previous-level interface provided by the settings application.

The page indicator 307 indicates that the current user interface 32 is provided by the settings application.

The control 309 is used to monitor a user operation, and the electronic device 100 may enable/disable "One-click service launch" in response to the user operation.

The prompt information 310 is used to prompt a user of a function of "One-click service launch".

As shown in FIG. 3B, the electronic device 100 may enable "One-click service launch" in response to the user operation received on the control 309.

This is not limited to the user operation performed on the control 309 shown in FIG. 3B. In some other embodiments of this application, the electronic device 100 may further enable "One-click service launch" in another manner.

For example, the electronic device 100 may further enable "One-click service launch" by default, or the electronic device 100 may further enable "One-click service launch" in response to a received speech instruction.

For another example, the user may select, in the settings application on the electronic device 100, options for setting functions of Calendar (calendar). Then, the electronic device 100 may display the function options of Calendar (calendar), for example, a control "One-click service launch" for managing each application, and a control for managing geographical location permission or network permission of Calendar. Then, the user may select the control "One-click service launch" for managing each application, and the electronic device 100 may display one or more application options and controls corresponding to the application options. Then, the electronic device may enable "One-click service launch" of the application in response to the operation received on the control corresponding to the application option. In this way, when the electronic device 100 displays the reminder item of the schedule event on the display by using Calendar (calendar), if the associated application of the schedule event includes the application, the electronic device 100 displays the part or all of the schedule event information, and a control for starting the application.

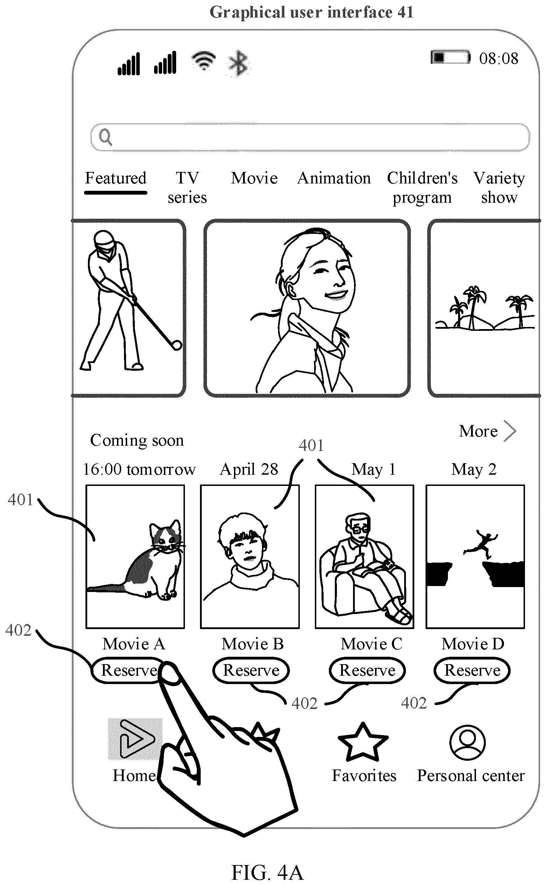

FIG. 4A to FIG. 4E, FIG. 5A to FIG. 5D, and FIG. 6A and FIG. 6B show examples of user interfaces provided by the electronic device 100 when the electronic device 100 obtains schedule event information in several scenarios.

FIG. 4A to FIG. 4E show a group of user interfaces related when the electronic device 100 obtains schedule event information provided by a network video application.

FIG. 4A shows an example of a user interface 41 provided by the network video application after the electronic device 100 starts the network video application. The user interface 41 may be an interface displayed by the electronic device 100 in response to a user operation detected on the video application icon 306b shown in FIG. 3A.

As shown in FIG. 4A, the user interface 41 displays a status bar, one or more video images 401, a reservation control 402, a bottom menu bar, a search box, a sub-channel entrance, and the like.

The video image 401 may be dynamic or static. The electronic device 100 may detect a user operation (for example, a tap operation) performed on the video image 401, obtain, in response to the user operation, a full-length video or a trailer of a network video indicated by the video image 401 from a server corresponding to the video application, and play the full-length video or the trailer.

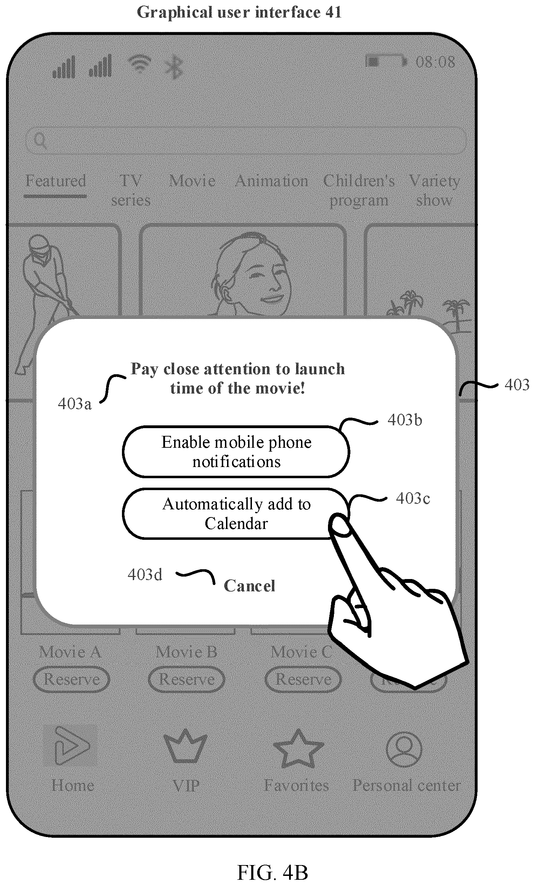

For the full-length video, of the network video, that is about to launch, the reservation control 402 is correspondingly displayed below the video image 401. The electronic device 100 may receive a user operation performed on the reservation control 402, and display a window 403 shown in FIG. 4B.

As shown in FIG. 4B, the window 403 may display prompt information 403a, a control 403b, a control 403c, and a control 403d. The prompt information 403a prompts the user to reserve the full-length video, of the network video, that is about to launch. The control 403b may be used to monitor a user operation. The electronic device 100 may notify the user in a form of a notification bar in response to the user operation when the full-length video of the network video launches. The control 403c may be used to monitor a user operation. The electronic device 100 may prompt the user by using Calendar (calendar) in response to the user operation when the full-length video of the network video launches. The control 403d may be used to monitor a user operation. The electronic device 100 may stop displaying the window 403 in response to the user operation.

In some embodiments, the electronic device 100 may not need to display the window 403 in FIG. 4B, and prompt the user by using Calendar (calendar) by default.

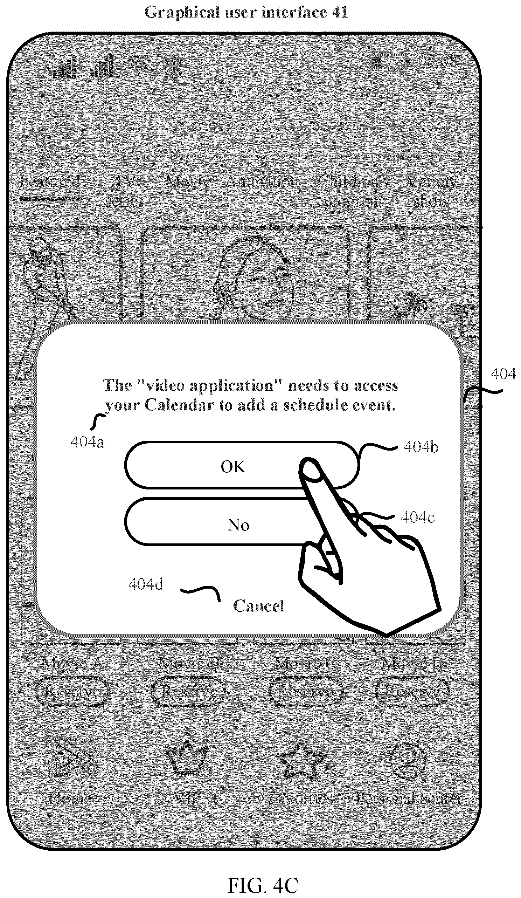

In some embodiments, if Calendar (calendar) on the electronic device 100 does not grant access permission to the network video application, after receiving the user operation performed on the control 403c shown in FIG. 4B, the electronic device 100 may display a window 404 shown in FIG. 4C.

As shown in FIG. 4C, the window 404 may display prompt information 404a, a control 404b, a control 404c, and a control 404d. The prompt information 404a prompts the user to grant the permission for the network video application to access Calendar (calendar). The control 404b may be used to monitor a user operation. The electronic device 100 may grant, in response to the user operation, the permission for the network video application to access Calendar (calendar). The control 404c may be used to monitor a user operation. The electronic device 100 may refuse, in response to the user operation, to grant the permission for the network video application to access Calendar (calendar). The control 404d may be used to monitor a user operation. The electronic device 100 may stop displaying the window 404 in response to the user operation.

As shown in FIG. 4C, after detecting the user operation performed on the control 404b in the window 404, the electronic device 100 obtains the permission for the network video application to access Calendar (calendar), and may add a schedule event to Calendar (calendar). Adding the schedule event to Calendar (calendar) means that the network video application sends the generated schedule event information to Calendar (calendar), and Calendar (calendar) stores the schedule event information locally or in a cloud on the electronic device 100.

In some embodiments, if the access permission of Calendar (calendar) on the electronic device 100 has been granted to the network video application, after receiving the user operation performed on the control 403c shown in FIG. 4B, the electronic device 100 may directly add the schedule event to Calendar (calendar) without displaying the window 404 shown in FIG. 4C.

In examples shown in FIG. 4A to FIG. 4C, the schedule event added by the electronic device 100 to Calendar (calendar) is a movie watching schedule event, and the related schedule event information may include time (April 27, 16:00) and a name (launch of a movie A). The schedule event information is input or selected by the user on the network video application.

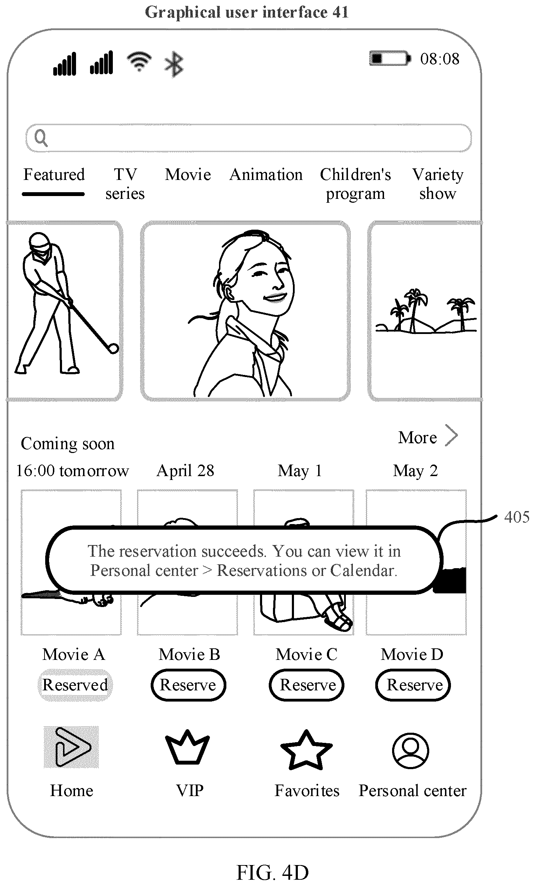

As shown in FIG. 4D, after successfully adding the schedule event to Calendar (calendar), the electronic device 100 may display prompt information 405 on the display, to prompt the user that the schedule event is currently successfully added, that is, the movie is successfully reserved. The prompt information 405 may further prompt a manner for the user to view detailed information about the schedule event.

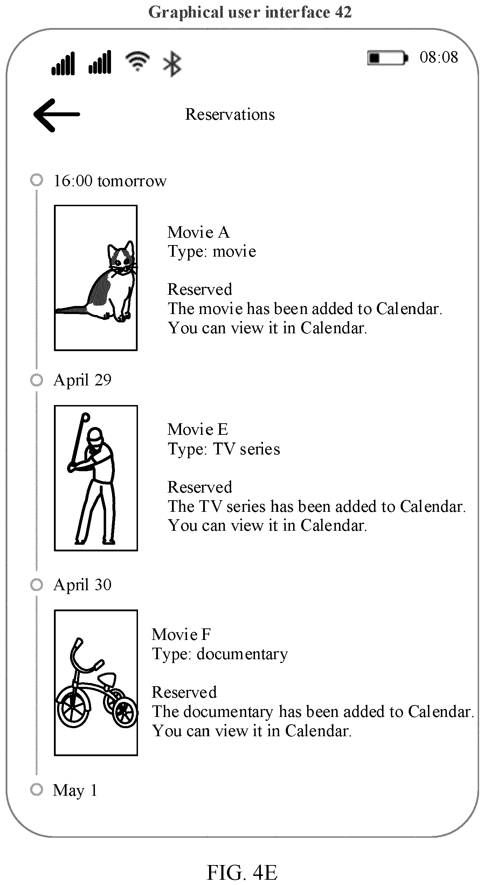

FIG. 4E shows a user interface 42 of the electronic device 100 for displaying the detailed information about the added schedule event. The user interface 42 may be an interface displayed after the electronic device 100 selects the reservation control after receiving a user operation on a "personal center" option on a menu bar at a bottom of the user interface 41.

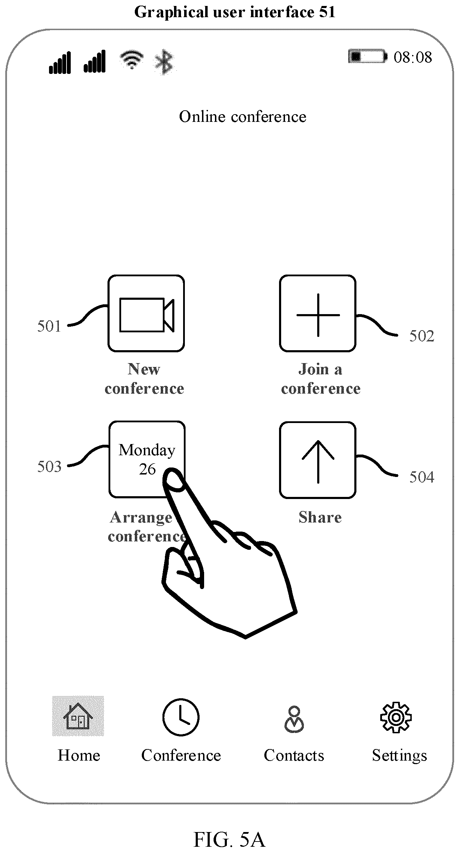

FIG. 5A to FIG. 5D show a group of user interfaces related when the electronic device 100 obtains schedule event information provided by an online conference application.

FIG. 5A shows an example of a user interface 51 provided by the online conference application after the electronic device 100 starts the online conference application. The user interface 51 may be an interface displayed by the electronic device 100 in response to a user operation detected on the online conference application icon 306c shown in FIG. 3A.

As shown in FIG. 5A, the user interface 51 displays a status bar, and one or more function controls, for example, a control 501 for starting a new online conference, a control 502 for joining a conference, a control 503, a control 504 for sharing a screen, and a bottom menu bar.

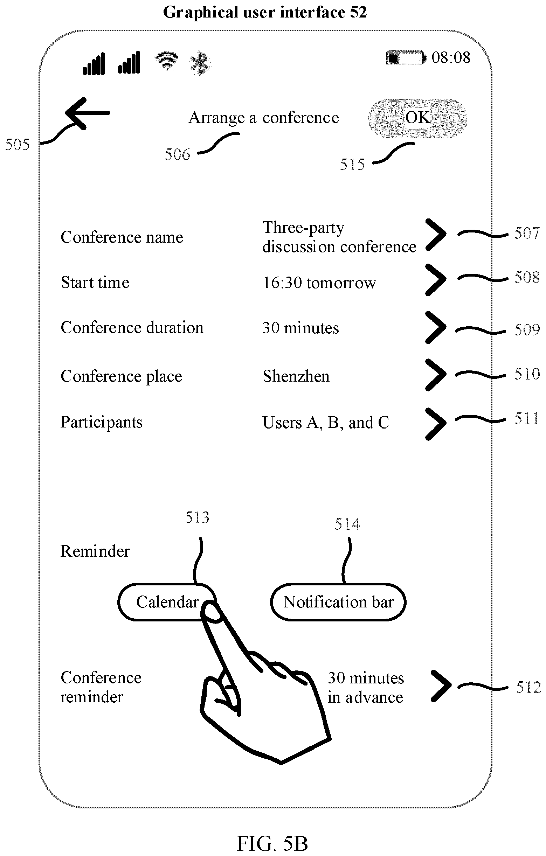

The control 503 is used to monitor a user operation. The electronic device 100 may display, in response to the user operation, a user interface 52 shown in FIG. 5B.

As shown in FIG. 5B, the user interface 52 may display a return button 505, a page indicator 506, one or more conference information input items, such as a conference name item 507, a start time item 508, a conference duration item 509, a conference place item 510, a participant item 511, a conference reminder time item 512, a control 513, a control 514, and an OK control 515.

The return button 505 is used to monitor a user operation. The electronic device 100 may return, in response to the user operation, to display a previous-level interface provided by the online conference application, namely, the user interface 51.

The page indicator 506 indicates that the current user interface 52 is used to set various information of an arranged conference. The page indicator 506 may be implemented as a text, an icon, or the like.

The conference information input item is used for the user to input various information about the arranged conference. The conference name item 507, the start time item 508, the conference duration item 509, the conference place item 510, the participant item 511, and the conference reminder time item 512 are respectively used by the user to input a conference name, start time, conference duration, a conference place, a participant, and conference reminder time of the arranged conference.

The control 513 and the control 514 are used by the user to set a conference reminder manner.

The control 513 may be used to monitor a user operation. The electronic device 100 may prompt the user by using Calendar (calendar) in response to the user operation when the reminder time of the conference arranged by the user starts.

The control 514 may be used to monitor a user operation. The electronic device 100 may notify the user in a form of a notification bar in response to the user operation when the reminder time of the conference arranged by the user starts.

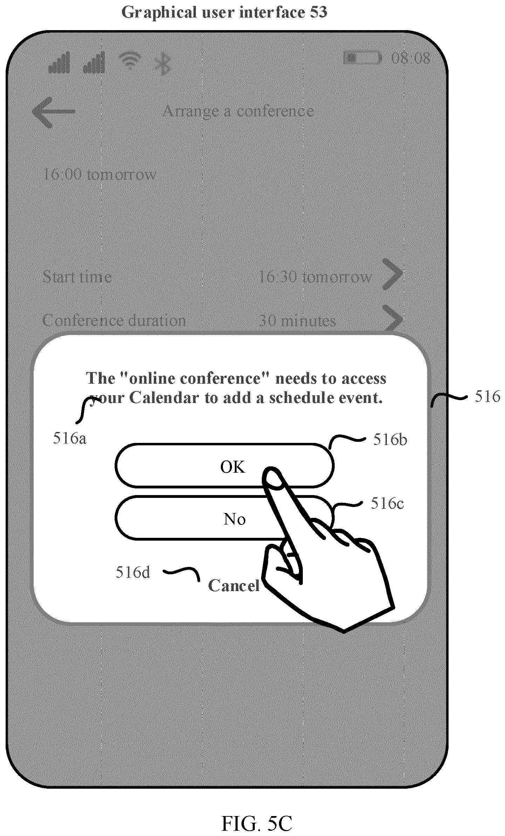

In some embodiments, if Calendar (calendar) on the electronic device 100 does not grant access permission to the online conference application, after receiving the user operation performed on the control 513 shown in FIG. 5B, the electronic device 100 may display a window 516 shown in FIG. 5C.

The window 516 may display prompt information 516a, a control 516b, a control 516c, and a control 516d. The prompt information 516a prompts the user to grant permission for the online conference application to access Calendar (calendar). Functions of the control 516b, the control 516c, and the control 516d are similar to those of the control 404b, the control 404c, and the control 404d in FIG. 4C. For details, refer to related descriptions.

In some embodiments, if the access permission of Calendar (calendar) on the electronic device 100 has been granted to the online conference application, after receiving the user operation performed on the control 513 shown in FIG. 5B, the electronic device 100 may directly add the schedule event to Calendar (calendar) without displaying the window 516 shown in FIG. 5C.

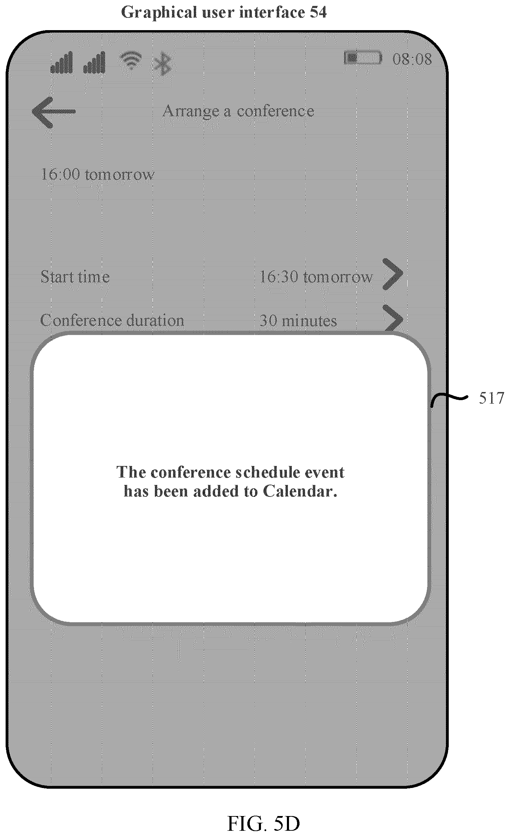

As shown in FIG. 5D, after successfully adding the schedule event to Calendar (calendar), the electronic device 100 may display prompt information 517 on the display, to prompt the user that the schedule event is currently successfully added, that is, the conference is successfully reserved. The prompt information 517 may further prompt a manner for the user to view detailed information about the schedule event.

In examples shown in FIG. 5A to FIG. 5D, the schedule event added by the electronic device 100 to Calendar (calendar) is an online conference schedule event, and the related schedule event information may include time (April 27, 16:30), a name (a three-party discussion conference), participants (a user A, a user B, and a user C), duration (30 min), a place (Shenzhen), and reminder time (starting from 16:00 on April 27). The schedule event information is input or selected by the user on the online conference application.

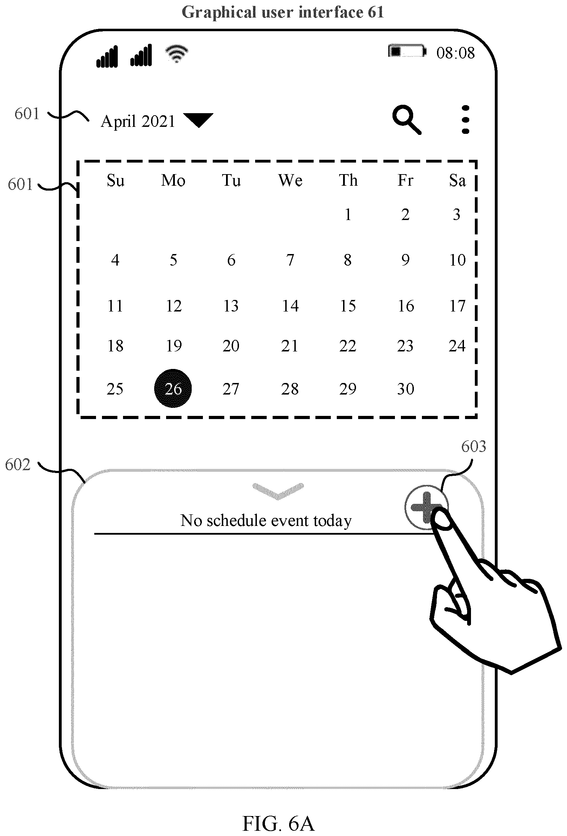

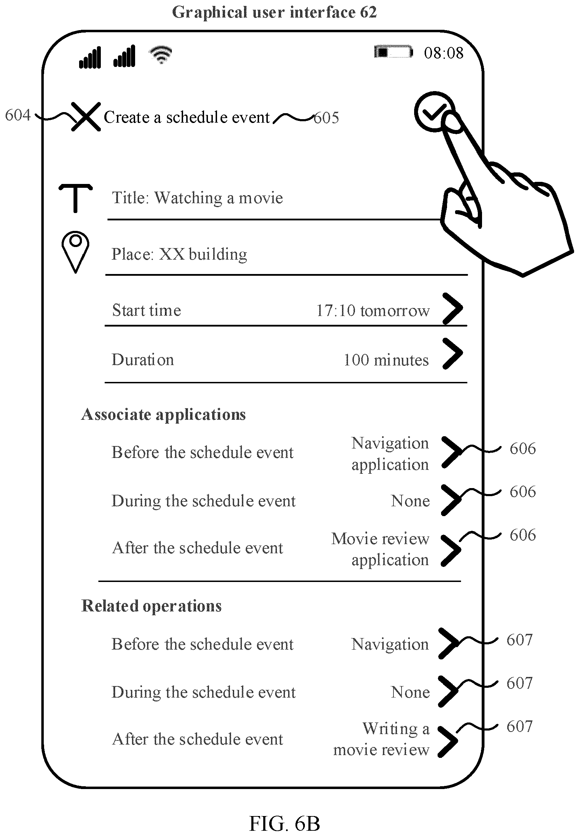

FIG. 6A and FIG. 6B show a group of user interfaces related when the electronic device 100 obtains schedule event information provided by Calendar (calendar).

FIG. 6A shows an example of a user interface 61 provided by the online conference application after the electronic device 100 starts the online conference application.

As shown in FIG. 6A, the user interface 61 displays a status bar, Calendar (calendar) 601, and a window 602.

Calendar (calendar) 601 is used to display the current calendar (calendar), for example, a quantity of days in a current month. A location of a current date in Calendar (calendar) can be displayed in a different form, for example, a black background color is added.

The window 602 is used to display various schedule events on a current day. The window 602 shown in FIG. 6A does not include any schedule event on the current day (namely, April 25). The window 602 may further include a control 603 for creating a schedule event.

As shown in FIG. 6A, the electronic device 100 may detect a user operation performed on the control 603, and display a user interface for creating the schedule event.

FIG. 6B shows an example of the user interface 62 for creating the schedule event.

The user interface 62 displays a Cancel icon 604, an OK icon 605, one or more schedule event information input items, such as a title item, a place item, a start time item, a duration item, an associated application option 606, or an associated operation option 607.

The Cancel icon 604 may be used to close the user interface 62.

The schedule event information input item is used for the user to input various information of the created schedule event. The title item, the place item, the start time item, and the duration item are respectively used by the user to input a title, a place, start time, and duration of the created schedule event.

The associated application option 606 may be used by the user to select an application associated with the currently created schedule event. In some embodiments, the associated application may be separately selected based on a moving period of a schedule event. For example, the user may separately select the associated application of the schedule event before the schedule event, during the schedule event, after the schedule event. There may be one or more applications associated with each period of the schedule event. This is not limited herein. For a function of the associated application, refer to descriptions in subsequent embodiments.

The associated operation option 607 may be used by the user to select an application associated with the currently created schedule event. In some embodiments, an associated operation may be separately selected based on a moving period of the schedule event. For example, the user may separately select the associated operation of the schedule event before the schedule event, during the schedule event, after the schedule event. There may be one or more operations associated with each period of the schedule event. This is not limited herein. In some embodiments, after the user selects the associated application of the schedule event, the electronic device 100 may provide options of operations that can be performed by the associated application, so that the user selects the associated operation of the schedule event. For example, after the user selects a navigation application, the electronic device 100 may provide operation options such as navigation and step counting for the user to select.

For ease of user operation, only one or one group of the associated application 606 and the associated operation 607 may be set, and a correspondence is stored in the electronic device.

The OK icon 605 may be used to monitor a user operation. The electronic device 100 may create the schedule event in response to the user operation based on information received in the user interface 62.

As shown in FIG. 6B, after the electronic device 100 receives the user operation performed on the OK icon 605, the created schedule event is a travel schedule event, and the related schedule event information may include time (17:10-18:50 on April 27), a name (watching a movie), duration (100 min), a place (XX building), and the associated applications (including a navigation application and a movie review application). The schedule event information is input or selected by the user in Calendar (calendar).

This is not limited to the manner of creating the schedule event and obtaining the schedule event information by the electronic device 100 shown in the foregoing several user interfaces. The electronic device 100 may further create a schedule event and obtain schedule event information in another manner. For example, the electronic device 100 may further create a schedule event of a flash sale item by using a shopping application, and create a travel schedule event by using a ticket booking application.

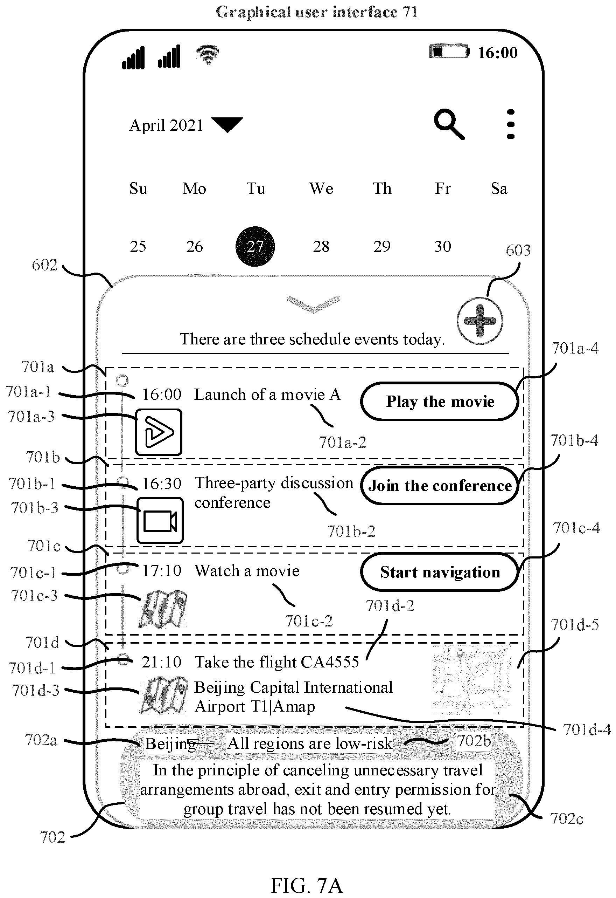

FIG. 7A to FIG. 7L show examples of user interfaces provided by the electronic device 100 when the electronic device 100 displays a reminder item of a schedule event by using Calendar (calendar).

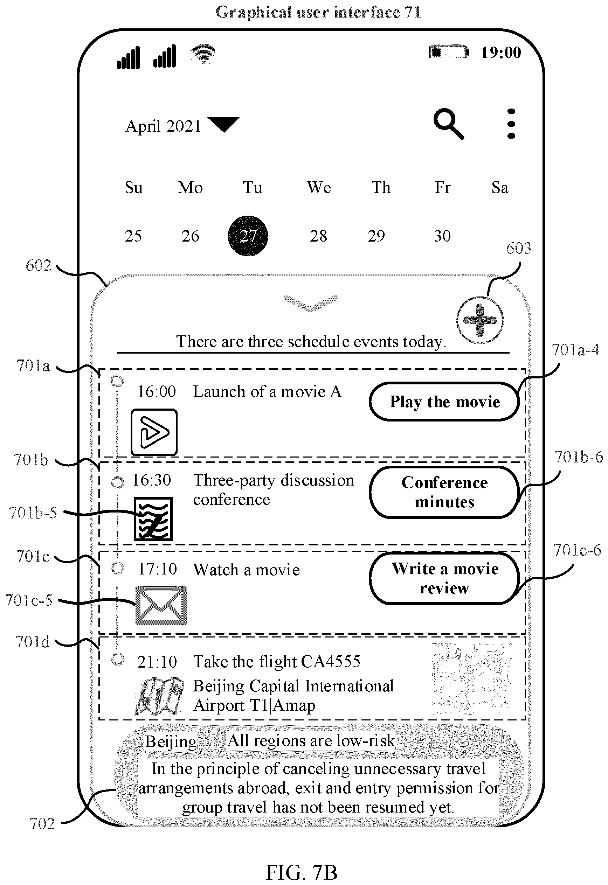

FIG. 7A and FIG. 7B show examples of a manner in which the electronic device 100 displays reminder items of schedule events in a user interface of Calendar (calendar).

The user interface 71 shown in FIG. 7A is similar to the user interface 61 shown in FIG. 6A. For details, refer to related descriptions.

As shown in FIG. 7A, when the electronic device 100 displays the user interface 71, a current date is April 27, current time is 16:00, and a window 602 displays reminder items of a plurality of schedule events on the current day that are obtained from Calendar (calendar), for example, a reminder item 701a, a reminder item 701b, a reminder item 701c, and a reminder item 701d. If Calendar (calendar) further includes more schedule events, the user may input an up-down slide operation in the window 602, to view reminder items of the more schedule events.

As shown in FIG. 7A, each reminder item includes a part or all of schedule event information of a corresponding schedule event and a control.

The reminder item 701a displays a part of information of a movie watching schedule event, for example, start time (April 27, 16:00) 701a-1, a name (launch of a movie A) 701a-2, an identifier 701a-3 of an associated project of the movie watching schedule event at the current time (April 27, 16:00), for example, an icon and a name, and a control 701a-4 for playing the movie.

The reminder item 701b displays a part of information of an online conference schedule event, for example, start time (April 27, 16:30) 701b-1, a name (three-party discussion conference) 701b-2, an identifier 701b-3 of an associated project of the online conference schedule event at the current time (April 27, 16:00), for example, an icon and a name, and a control 701b-4 for joining a conference.

The reminder item 701c displays a part of information of a travel schedule event, for example, start time (April 27, 17:10) 701c-1, a name (watching a movie) 701c-2, an identifier 701c-3 of an associated project (an online conference application) of the travel schedule event at the current time (April 27, 16:00), for example, an icon and a name, and a control 701c-4 for navigation.

The reminder item 701d displays a part of information of another travel schedule event, for example, start time (April 27, 21:10) 701d-1, a name (taking the flight CA4555) 701d-2, an identifier 701d-3 of an associated project of the travel schedule event at the current time (April 27, 16:00), for example, an icon and a name, an identifier 701d-4 of a place in the travel schedule event, for example, a text, and a control 701d-5 for navigation.

In some embodiments, the reminder items in the window 602 may be sequentially arranged based on a sequence of start time of the schedule events. For example, a reminder item of a schedule event with earlier start time is in the front.

In addition, because the current date (April 27) includes the long-distance travel schedule event, during an epidemic period, the window 602 may further display a reminder item 702 for reminding an epidemic risk in a destination. The reminder item 702 may display an identifier 702a of the destination in the travel schedule event, epidemic prompt information 702b, and an identifier 702c of an application providing epidemic information.

FIG. 7B shows a manner in which the electronic device 100 displays the reminder items of the schedule events in the user interface of Calendar (calendar) at 19:00 on April 27 after a period of time and schedule event statuses change.

Because the associated project of the online conference schedule event at 19:00 on April 27 is changed to an email, an identifier and a control of the application in the reminder item 701b are changed. The reminder item 701b displays an identifier 701b-5 of the associated project (email) of the travel schedule event at the current time (April 27, 16:00), and a control 701b-6 for documenting conference minutes.

Similarly, because the associated project of the travel schedule event at 19:00 on April 27 is changed to a movie review application, an identifier and a control of the application in the reminder item 701c are changed. The reminder item 701c displays an identifier 701c-5 of the associated project (the movie review application) of the travel schedule event at the current time (April 27, 16:00), and a control 701c-6 for documenting conference minutes.

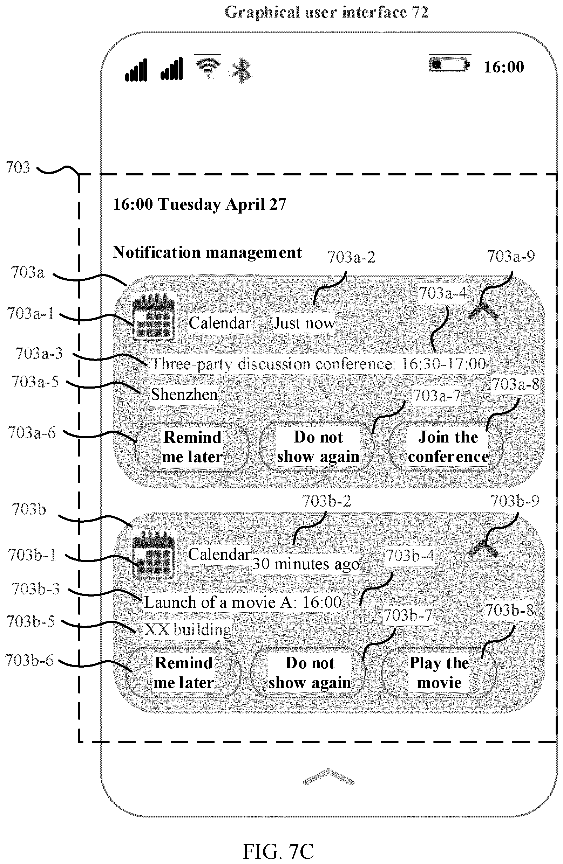

FIG. 7C to FIG. 7E show examples of a manner in which the electronic device 100 displays reminder items of schedule events in a notification bar.

The notification bar is a system application providing a message notification function.

FIG. 7C shows an example of a user interface 72 provided by the notification bar. The user interface 72 may be displayed by the electronic device 100 in response to a top-down sliding operation starting from the top of the display when the electronic device 100 displays any user interface.

As shown in FIG. 7C, the notification bar 703 may be displayed in the user interface 72. The notification bar 703 includes the reminder items of the schedule events whose reminder time includes current time, for example, a reminder item 703a and a reminder item 703b; and a control 704.

Each reminder item includes an identifier of Calendar (calendar) providing schedule event information, a generation time indicator of the reminder item, a part or all of schedule event information of the schedule event, and a series of controls.

The reminder item 703a displays an identifier 703a-1 of Calendar (calendar), a generation time indicator 703a-2 of the reminder item 703a, a name of an online conference schedule event (three-party discussion conference) 703a-3, start/end time (16:30-17:00) 703a-4, a place 703a-5, a control 703a-6 for displaying the reminder item 703a later, a control 703a-7 for stopping displaying the reminder item 703a, a control 703a-8 for joining a conference, and a control 703a-9 for collapsing the reminder item 703a.

The reminder item 703b displays an identifier 703b-1 of Calendar (calendar), a generation time indicator 703b-2 of the reminder item 703b, a name of a movie watching schedule event (launch of a movie A) 703b-3, start time (16: 00) 703b-4, a place 703b-5, a control 703b-6 for displaying the reminder item 703b later, a control 703b-7 for stopping displaying the reminder item 703b, a control 703b-8 for playing the movie A, and a control 703b-9 for collapsing the reminder item 703b.

In some embodiments, the reminder items in the notification bar may be sequentially arranged based on a generation time sequence. For example, a reminder item generated later is in the front.

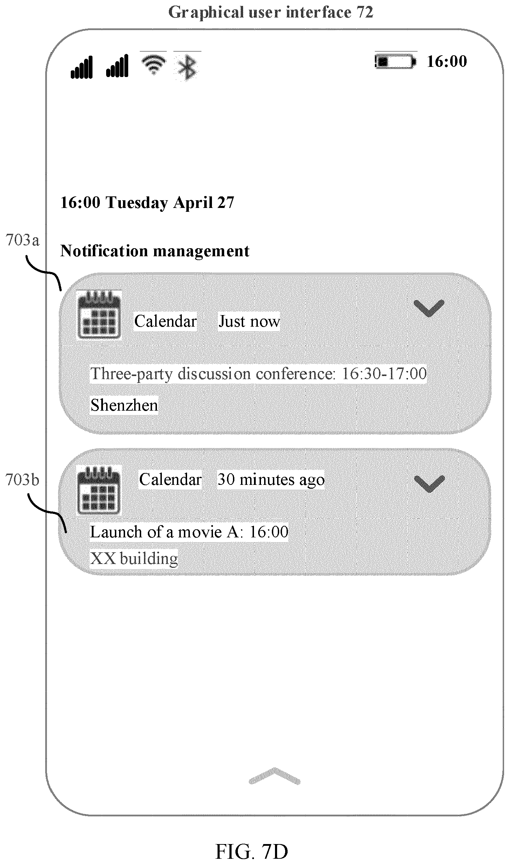

Refer to FIG. 7D. After detecting a user operation performed on the control 703a-9, the electronic device 100 may collapse the reminder item 703a, and hide a part of information in the reminder item 703a in FIG. 7C. Similarly, after detecting a user operation performed on the control 703b-9, the electronic device 100 may collapse the reminder item 703b, and hide a part of information in the reminder item 703b in FIG. 7C.

In some embodiments, the electronic device may display a user interface shown in FIG. 7D when the electronic device is in a locked state, and display the user interface shown in FIG. 7C when the electronic device is in an unlocked state. This can prevent information leakage and protect user privacy.

The control 704 in FIG. 7C may be used to monitor a user operation. The electronic device 100 may stop folding the entire notification bar in response to the user operation, that is, stop displaying the user interface 72 shown in FIG. 7C.

In some embodiments, in a process in which the user uses the electronic device 100, the electronic device 100 may further display a reminder item at the top of the display after generating the reminder item in the notification bar, and the reminder item disappears after being continuously displayed for a period of time.

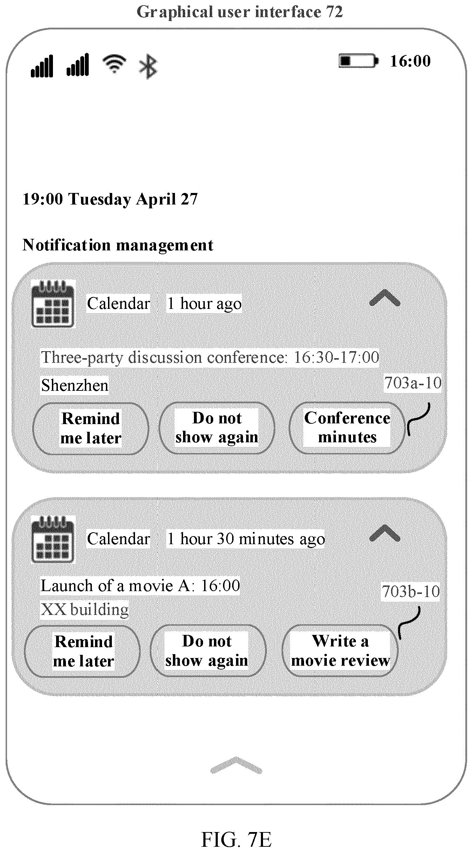

FIG. 7E shows a manner in which the electronic device 100 displays the reminder items of the schedule events in the user interface provided by the notification bar at 19:00 on April 27 after a period of time and schedule event statuses change.

Because an associated project of the online conference schedule event at 19:00 on April 27 is changed to an email, the control in the reminder item 703a is changed. The control 703a-8 that is displayed in the reminder item 703a and that is for joining the conference is changed to a control 703a-10 for documenting conference minutes.

Similarly, because an associated project of the travel schedule event at 19:00 on April 27 is changed to a movie review application, the control in the reminder item 703b is changed. The control 703b-8 that is displayed in the reminder item 703a and that is for playing the movie A is changed to a control 703b-10 for writing a movie review.

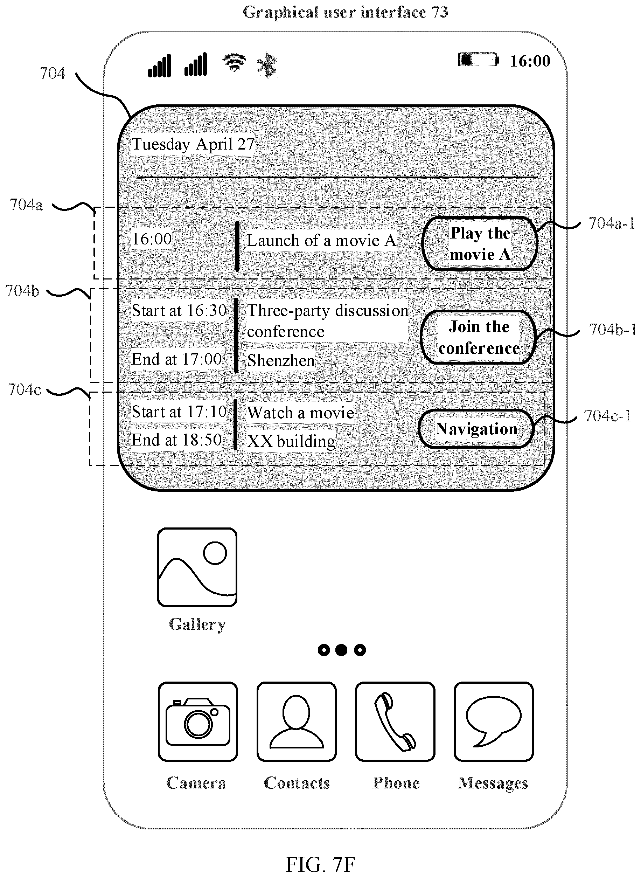

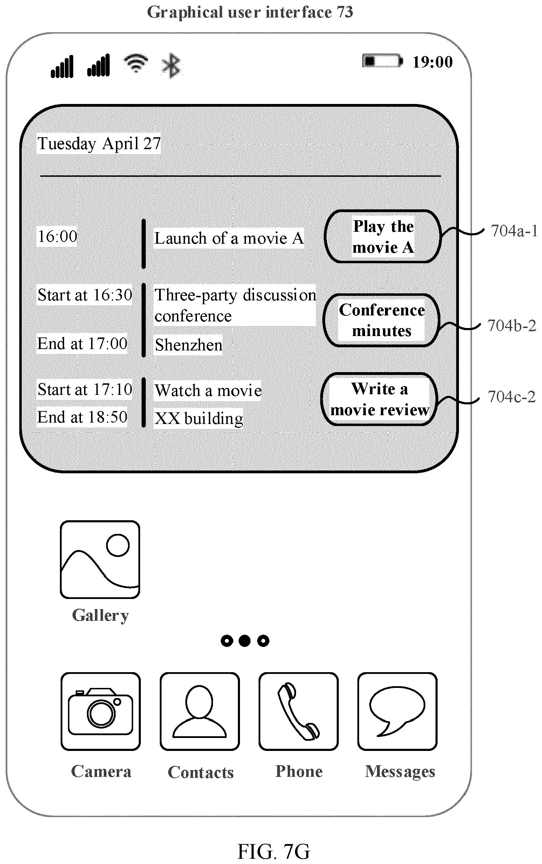

FIG. 7F and FIG. 7G show examples of a manner in which the electronic device 100 displays reminder items of schedule events in a desktop card.

The desktop card provides important information on the electronic device 100 in a form of a card, for example, departure and arrival time reminders of a train and a flight, opening time of a movie, and a hotel check-in reminder, for the user to view at any time. The desktop card may be on a leftmost screen, or may be on any page of a desktop, for example, a home screen. When the desktop card is on the desktop, an application icon on the desktop is usually located below the desktop card. There may be one or more desktop cards.

One desktop card can be used to display information from different applications.

FIG. 7F shows an example of a user interface 73 displayed by the electronic device 100. The user interface 73 is a home screen, and the desktop card 704 is displayed in the user interface. The desktop card 704 includes the reminder items of the schedule events whose reminder time includes current time, for example, a reminder item 704a, a reminder item 704b, and a reminder item 704c. For detailed content and functions of each reminder item, refer to descriptions in FIG. 7A to FIG. 7E.

FIG. 7G shows a manner in which the electronic device 100 displays the reminder items of the schedule events in the desktop card at 19:00 on April 27 after a period of time and schedule event statuses change.

As shown in FIG. 7G, because associated projects of some schedule events change at 19:00 on April 27, controls in some reminder items change.

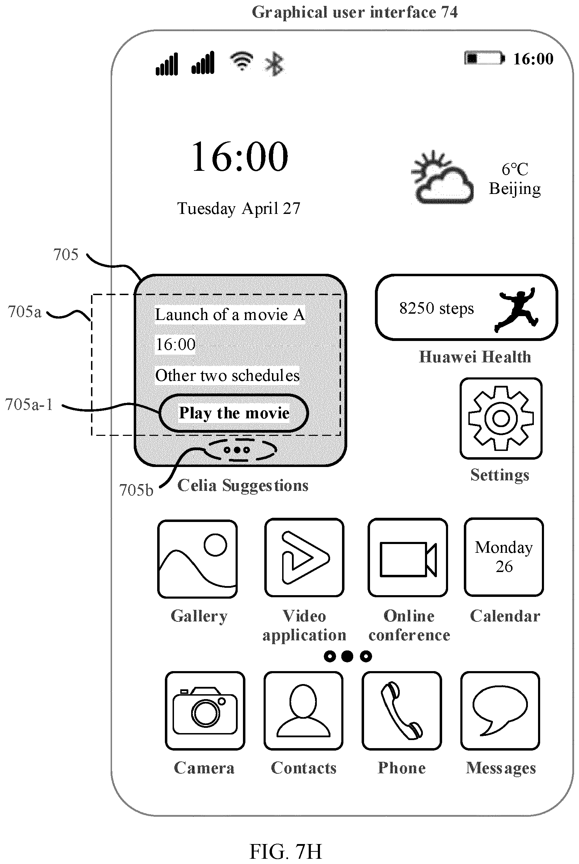

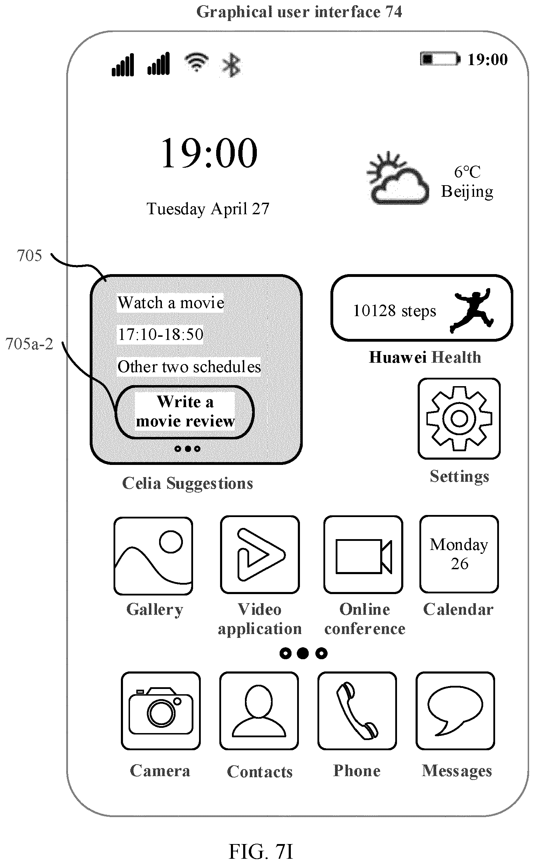

FIG. 7H and FIG. 7I show examples of a manner in which the electronic device 100 displays reminder items of schedule events in a smart card.

The smart card provides important information on the electronic device 100 in a form of a card, for example, departure and arrival time reminders of a train and a flight, opening time of a movie, and a hotel check-in reminder, for the user to view at any time. The smart card may be on any page of a desktop, for example, a home screen. For example, the smart card may be implemented as "Celia Suggestions". There may be one or more smart cards.

Usually, one smart card is used to display various information from a same application.

Compared with the desktop card, the smart card has more flexible display time. For example, the smart card may start to display a reminder item of a schedule event 10 minutes before schedule event start time, and the notification bar may start to display the reminder item of the schedule event half an hour before the schedule event start time.

FIG. 7H shows an example of a user interface 74 displayed by the electronic device 100. The user interface 74 is a home screen, and the smart card 705 is displayed in the user interface. The smart card 705 includes the reminder items of the schedule events whose reminder time includes the current time, for example, a reminder item 705a. For detailed content and functions of the reminder item, refer to descriptions in FIG. 7A to FIG. 7E.

FIG. 7I shows a manner in which the electronic device 100 displays the reminder items of the schedule events in the smart card at 19:00 on April 27 after a period of time and schedule event statuses change.

As shown in FIG. 7I, because associated projects of some schedule events change at 19:00 on April 27, controls in some reminder items change.

In some embodiments of this application, the reminder items of the schedule events may be distributed on different pages of the desktop card or the smart card. When the electronic device 100 displays the reminder items of the schedule events in the desktop card or the smart card, the user may perform a left-right slide operation to browse a reminder item of a schedule event on another page in the card. For example, refer to FIG. 7H. The smart card 705 may further include a page indicator 705c for indicating a page on which the user currently browses a reminder item of a schedule event in the card.

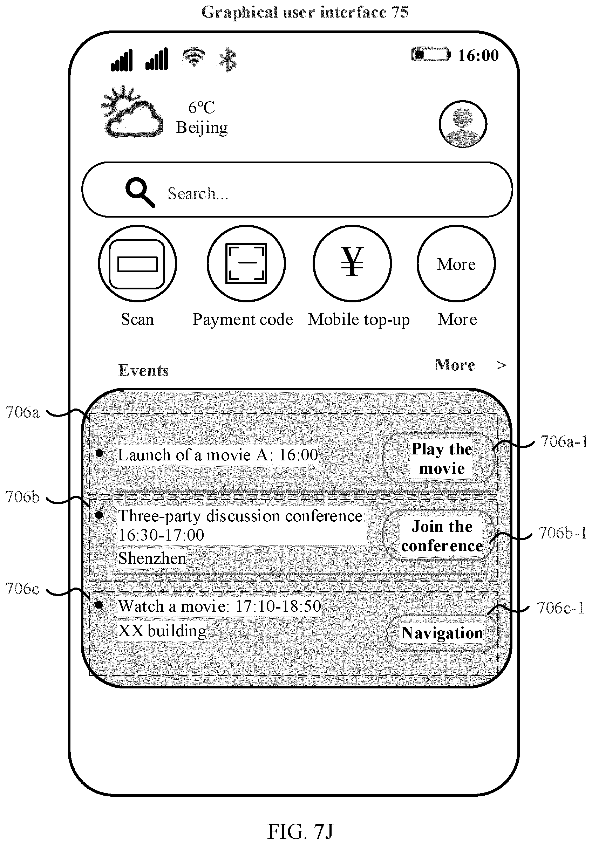

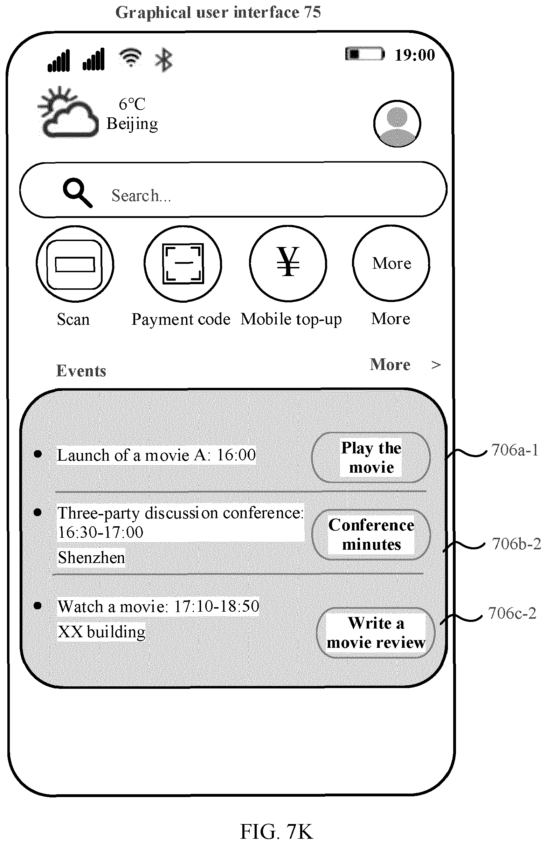

FIG. 7J and FIG. 7K show examples of a manner in which the electronic device 100 displays reminder items of schedule events on a leftmost screen.

The leftmost screen provides important information on the electronic device 100, for example, departure and arrival time reminders of a train and a flight, opening time of a movie, and a hotel check-in reminder, for the user to view at any time, and may further provide application search and function search.

The leftmost screen is a desktop, and is a user interface on the left of a home screen. Usually, when the electronic device displays the home screen, the user may input a left-to-right slide operation to trigger the electronic device to display the leftmost screen.

FIG. 7J shows an example of an implementation of displaying the leftmost screen by the electronic device 100.

As shown in FIG. 7J, a user interface 75 displays the reminder items of the schedule events whose reminder time includes current time, for example, a reminder item 706a, a reminder item 706b, and a reminder item 706c. For detailed content and functions of the reminder item, refer to descriptions in FIG. 7A to FIG. 7E.

FIG. 7K shows a manner in which the electronic device 100 displays the reminder items of the schedule events on the leftmost screen at 19:00 on April 27 after a period of time and schedule event statuses change.

As shown in FIG. 7K, because associated projects of some schedule events change at 19:00 on April 27, controls in some reminder items change.

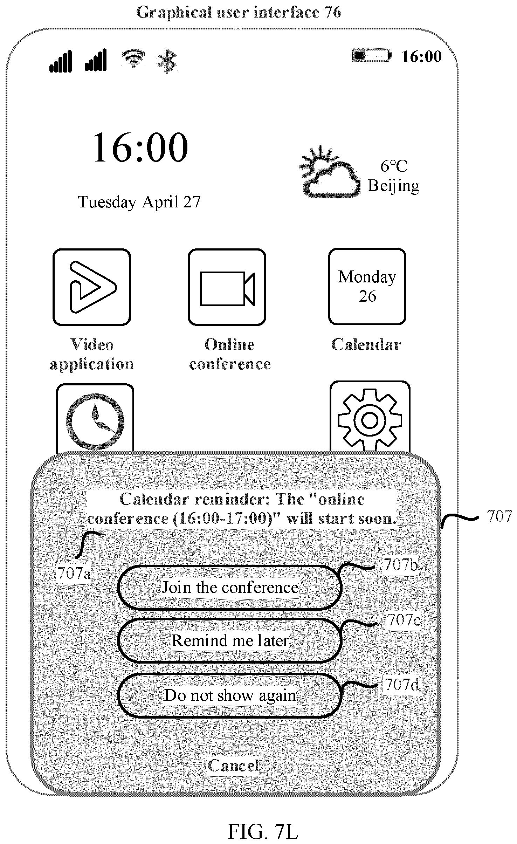

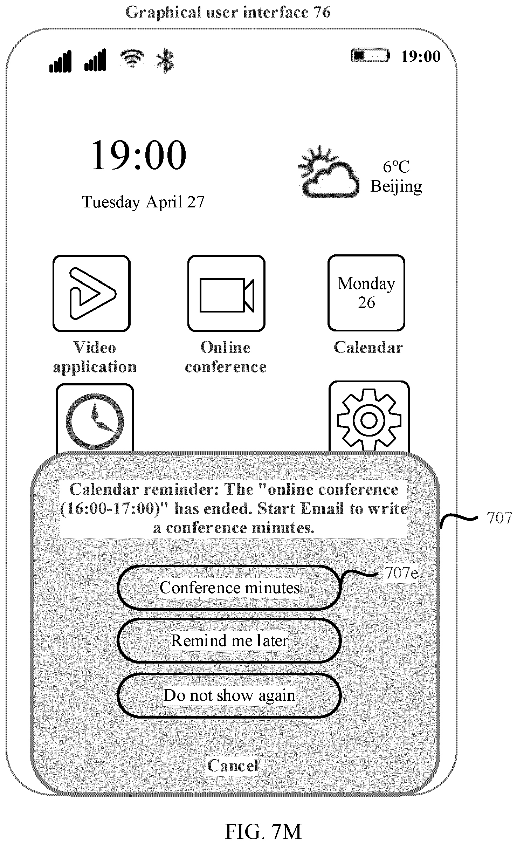

FIG. 7L and FIG. 7M show examples of a manner in which the electronic device 100 displays reminder items of schedule events in a pop-up window.

The pop-up window displays information at specified time to prompt the user. The pop-up window may be displayed in any user interface. This is not limited herein. Usually, the electronic device stops displaying the pop-up window only after the user inputs a specific operation on the electronic device. Otherwise, the electronic device continuously displays the pop-up window.

FIG. 7L shows an example of a user interface 76 displayed by the electronic device 100.

As shown in FIG. 7L, the pop-up window 707 is displayed in the user interface 76. The reminder item of the schedule event (namely, an online conference schedule event) whose start reminder time is the same as current time (namely, 16:00 on April 27) is displayed in the pop-up window 707. The reminder item includes prompt information 707a, a control 707b, a control 707c, and a control 707d. The prompt information 707a prompts a part of information of the schedule event (namely, the online conference schedule event) whose start reminder time is the same as the current time (namely, 16:00 on April 27), for example, a name, and start/end time. For detailed content and functions of the reminder item, refer to descriptions in FIG. 7A to FIG. 7E.

FIG. 7M shows content displayed by the electronic device 100 in a pop-up window 707 at 19:00 on April 27 after a period of time when a schedule event status changes.

As shown in FIG. 7M, because associated projects of some schedule events change at 19:00 on April 27, a control in the pop-up window 707 changes.

In some embodiments, when the electronic device 100 displays the reminder item of the schedule event in the pop-up window, the pop-up window may be implemented as a floating window. The floating window may be transparent or opaque. A shape and a size of the floating window are not limited in embodiments of this application. In some embodiments, the user may adjust the shape and the size of the floating window, and the adjustment manner is not displayed in embodiments of this application. In some embodiments, the user may further drag the floating window on the display.

In some embodiments, the electronic device may further display the pop-up window in full screen, or display the pop-up window in a gray background manner. This can highlight content displayed in the pop-up window, so that the user can view the content conveniently.

The manner in which the electronic device 100 displays the reminder item of the schedule event shown in FIG. 7A to FIG. 7M is merely an example. In another manner, the electronic device 100 may further display the reminder item of the schedule event in another manner. For example, the electronic device 100 may further display the reminder item in a form of a subcard or the like, and this is not limited to the timeline manner shown in FIG. 7A and FIG. 7B and the list manner shown in FIG. 7C to FIG. 7K.

In some embodiments, when displaying the reminder item of the schedule event by using the notification bar, the desktop card, the leftmost screen, or the like, the electronic device 100 may further periodically change the displayed reminder item in a fixed period. For example, a reminder item of a schedule event to be executed today is displayed in first 10 minutes, and a reminder item of a schedule event to be executed tomorrow is displayed in last 10 minutes.

In some embodiments, in the reminder item of the schedule event displayed by the electronic device 100 by using Calendar (calendar) shown in FIG. 7A to FIG. 7L, a control for starting the associated application or performing the corresponding operation and remaining information in the reminder item may be displayed at different moments. For example, the electronic device 100 may first display other information in the reminder item, and then display the control after a period of time.

In some embodiments, when the electronic device 100 displays the reminder item of the schedule event by using the notification bar, the desktop card, the smart card, the leftmost screen, or the like, if the long-distance travel schedule event is included, the electronic device 100 may also display, by using the notification bar, the desktop card, the smart card, the leftmost screen, or the like, the reminder item for reminding the epidemic risk of the destination.

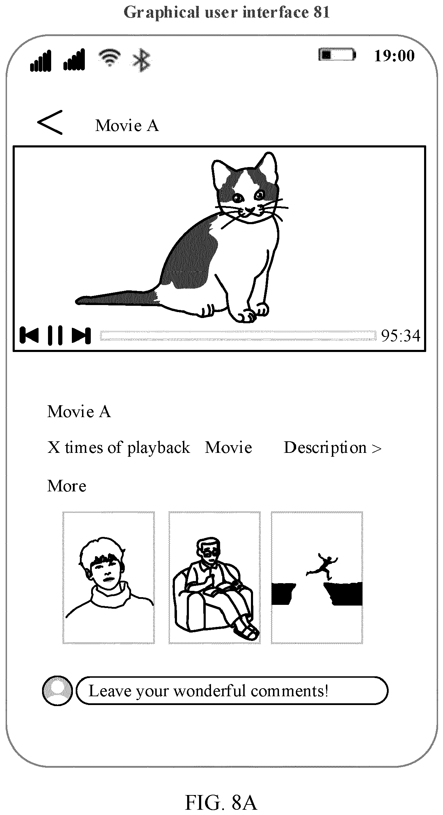

FIG. 8A to FIG. 8I show examples of user interfaces displayed after the electronic device 100 receives a user operation performed on a control in a reminder item and starts an associated application.

FIG. 8A shows an example of a user interface 81 when the electronic device 100 starts a network video application and plays a movie A. The user interface 81 may be displayed by the electronic device 100 in response to a user operation received on the control 701a-4 in FIG. 7A/FIG. 7B, the control 703b-8 in FIG. 7C, the control 704a-1 in FIG. 7F/FIG. 7G, the control 705a-1 in FIG. 7H, and the control 706a-1 in FIG. 7J/FIG. 7K.

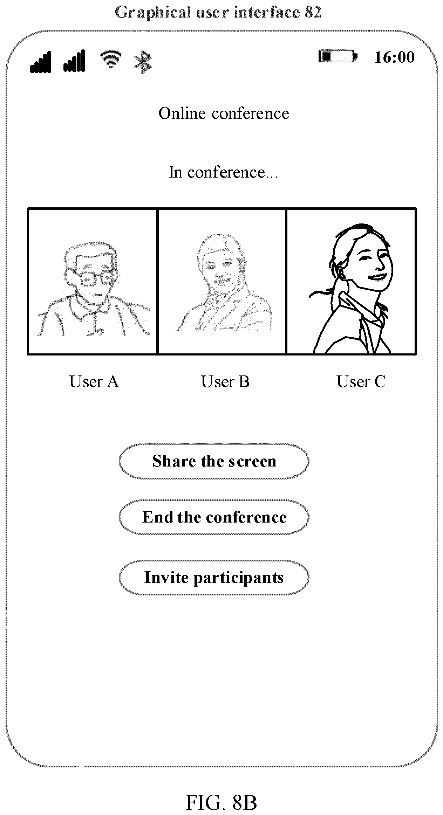

FIG. 8B shows an example of a user interface 82 after the electronic device 100 starts an online conference application and joins a conference. The user interface 82 may be displayed by the electronic device 100 in response to a user operation received on the control 701b-4 in FIG. 7A, the control 703a-9 in FIG. 7C, the control 704b-1 in FIG. 7F, the control 706b-1 in FIG. 7J, or the control 707c in FIG. 7L.

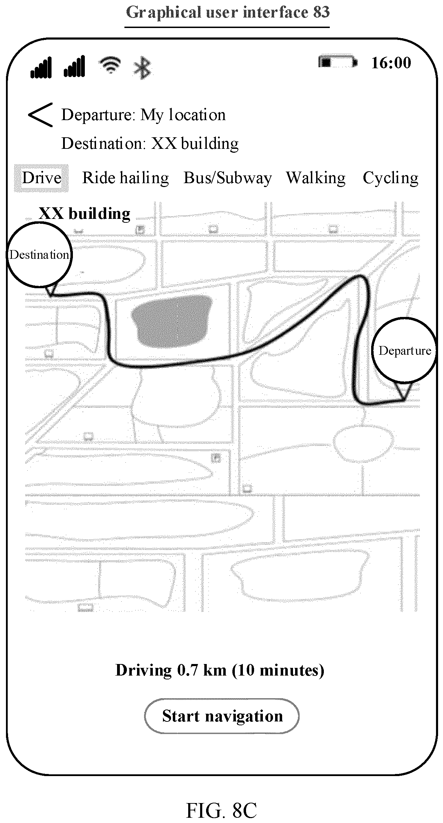

FIG. 8C shows an example of a user interface 83 when the electronic device 100 starts a navigation application and queries a route. The user interface 83 may be displayed by the electronic device 100 in response to a user operation received on the control 701c-4 in FIG. 7A, the control 704c-1 in FIG. 7F, or the control 706c-1 in FIG. 7J.

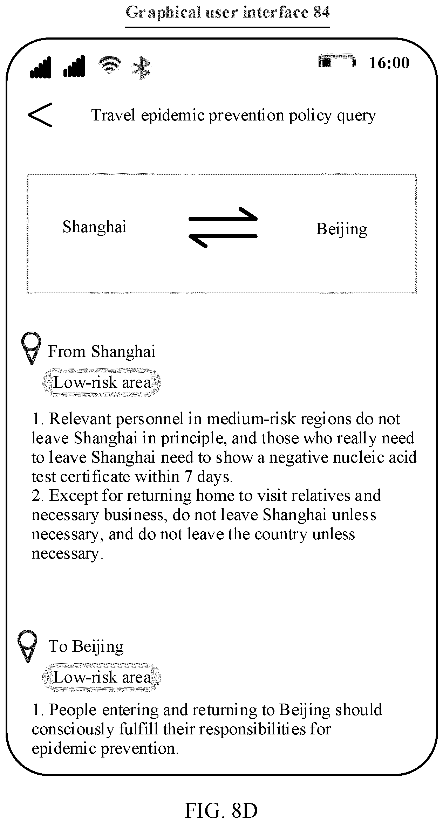

FIG. 8D shows an example of epidemic prevention policy information displayed by the electronic device in a navigation application. A user interface 84 shown in FIG. 8D may be displayed by the electronic device 100 in response to a user operation on the reminder item 702 in FIG. 7A or FIG. 7B.

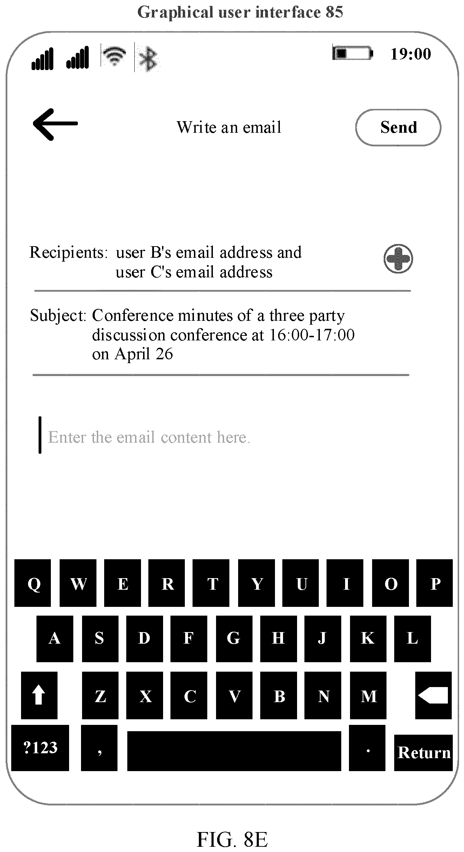

FIG. 8E shows an example of a user interface 85 when the electronic device 100 starts an email application and an input method application, and receives input email content. The user interface 85 may be displayed by the electronic device 100 in response to a user operation received on the control 701b-6 in FIG. 7B, the control 703a-10 in FIG. 7E, the control 704b-2 in FIG. 7G, the control 706b-2 in FIG. 7K, and the control 707e in FIG. 7M.

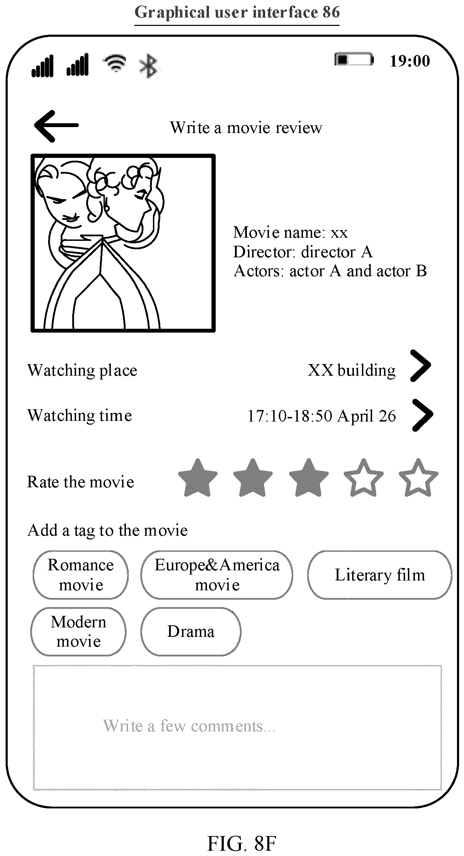

FIG. 8F shows an example of a user interface 86 when the electronic device 100 starts a movie review application and receives an input movie review. The user interface 86 may be displayed by the electronic device 100 in response to a user operation received on the control 701c-6 in FIG. 7B, the control 703b-10 in FIG. 7E, the control 704c-2 in FIG. 7G, the control 705a-2 in FIG. 7I, or the control 706c-2 in FIG. 7K.

FIG. 8A to FIG. 8F are merely examples. During specific implementation, after receiving the user operation performed on the control in the reminder item, the electronic device 100 may further start another application and perform another operation. This is not limited herein.

In some embodiments, after receiving the user operation performed on the control in the reminder item, the electronic device 100 may display, in full screen, the user interface provided by the associated application, as shown in FIG. 8A to FIG. 8F.

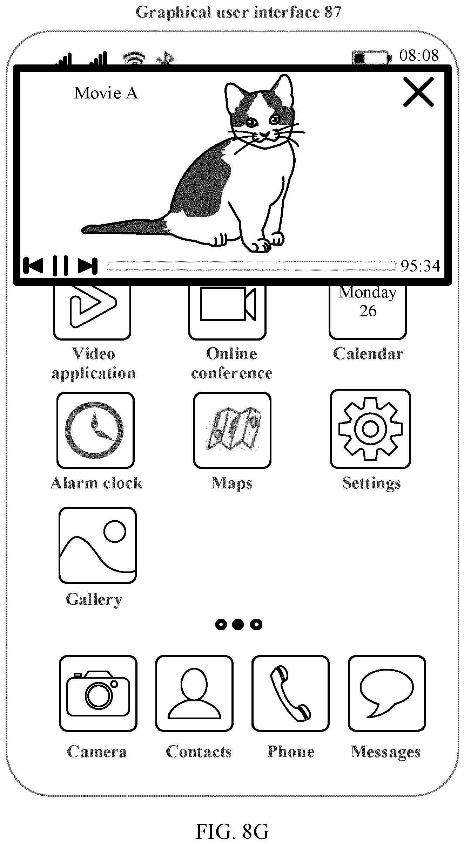

In some embodiments, after receiving the user operation performed on the control in the reminder item, the electronic device 100 may display, in a floating window, the user interface provided by the associated application. The floating window may be in a user interface originally displayed by the electronic device 100. The floating window may be transparent or opaque. A shape and a size of the floating window are not limited in embodiments of this application. In some embodiments, the user may adjust the shape and the size of the floating window, and the adjustment manner is not displayed in embodiments of this application. In some embodiments, the user may further drag the floating window on the display. For example, FIG. 8G shows a user interface 87 provided by the associated application that is displayed by the electronic device 100 in the floating window.

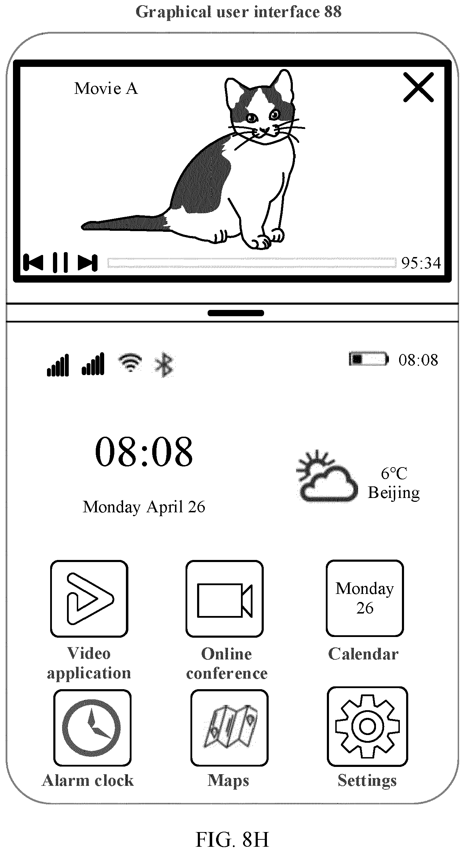

In some embodiments, after receiving the user operation performed on the control in the reminder item, the electronic device 100 may display, in split screen, a part or all of the original user interface and the user interface provided by the associated application. For example, FIG. 8H shows the part of the original user interface and a user interface 88 provided by the associated application that are displayed by the electronic device 100 in split screen.

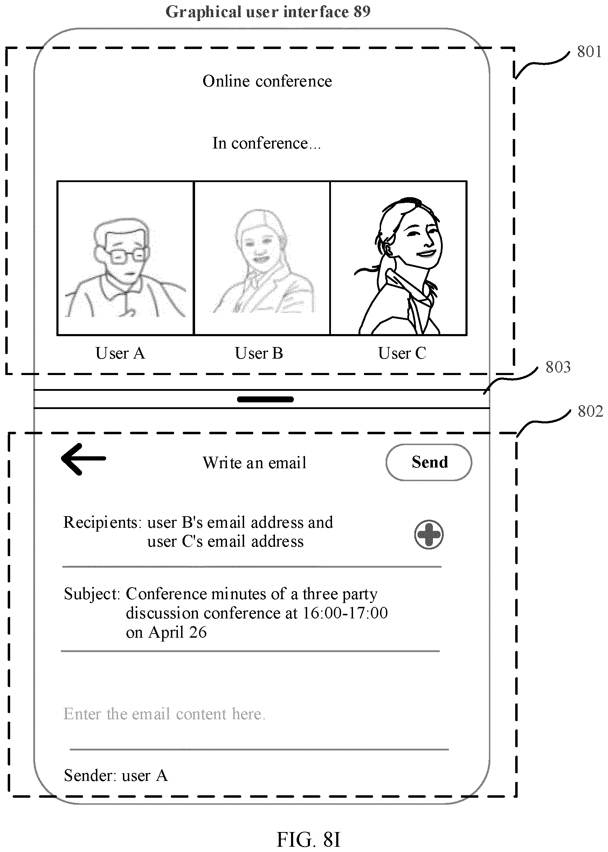

In some embodiments, if there are a plurality of associated applications of the schedule event, after receiving the user operation performed on the control in the reminder item, the electronic device 100 may display, in split screen, user interfaces separately provided by the plurality of associated applications. For example, FIG. 8I shows an example of a user interface 89 displayed by the electronic device in split screen in response to the user operation performed on the control in the reminder item (for example, the user operation performed on the control 701b-4 in FIG. 7A). As shown in FIG. 8I, the user interface 89 displays a user interface 801 provided by an online conference application, a user interface 802 provided by a mail, and a split-screen indication bar 803.

When the electronic device 100 displays two or more user interfaces in split screen, the user may adjust a location of the split-screen indication bar on the display, to adjust a size of each user interface on the display. In some embodiments, the user may further switch a location of each user interface on the display. For example, the user may input a quick upward or downward slide operation on one user interface, to switch locations of two user interfaces on the display.

This is not limited to displaying the user interfaces in split screen in a portrait mode shown in FIG. 8H or FIG. 8I. In embodiments of this application, the electronic device 100 may also display the user interfaces in split screen in a landscape mode. For example, when the electronic device 100 is in the landscape mode, the display may be divided into a left area and a right area, and the left area and the right area each may display a different user interface. When the user interfaces are displayed in split screen in the landscape mode, a size and a location of each user interface may also be adjusted with a user operation. This is not specifically limited herein.

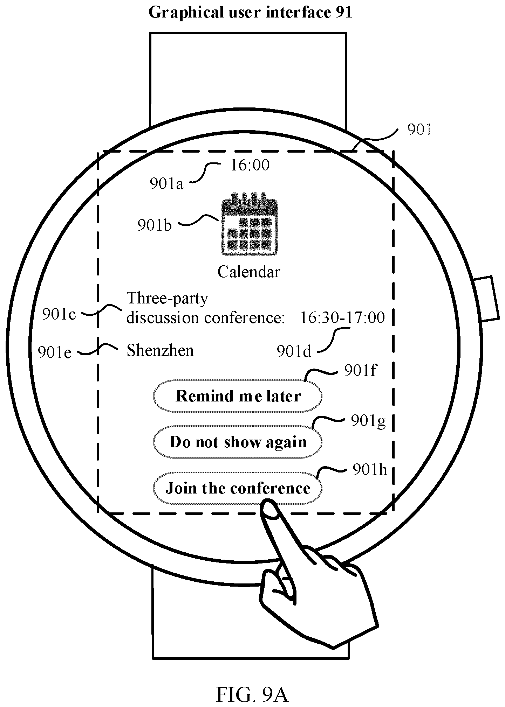

FIG. 9A to FIG. 9G show examples of a group of user interfaces related when an application is started and a corresponding operation is performed across devices.

In examples shown in FIG. 9A to FIG. 9D, after obtaining the schedule event information based on the schedule event, the electronic device 100 may send the schedule event information to another electronic device. The another electronic device may be selected by the electronic device 100 by default or selected by the user. For example, the another electronic device may be an electronic device 200. The electronic device 100 may be, for example, a smartphone, and the electronic device 200 may be, for example, a smartwatch.

In some embodiments, after receiving the schedule event information, the electronic device 200 may display the reminder item of the schedule event on a display. A manner in which the electronic device 200 displays the reminder item of the schedule event on the display is similar to the manner in which the electronic device 100 displays the reminder item of the schedule event, and the reminder item of the schedule event may also be displayed by using Calendar, a notification bar, a desktop card, a smart card, a leftmost screen, or a pop-up window. For details, refer to the foregoing related descriptions.

FIG. 9A shows an example of a user interface 91 displayed by the electronic device 200. As shown in FIG. 9A, when the electronic device 100 displays the user interface 91, a current date is April 27, and current time is 16:00.

A reminder item 901 is displayed in the user interface 91. The reminder item 901 displays a current time indicator 901a, an identifier 901b of Calendar (calendar), a part or all of information of the schedule event, such as a name (three-party discussion conference) 901c of an online conference schedule event, start/end time (16:30-17:00) 901d, and a place 901e, a control 901f for displaying the reminder item 901 later, a control 901g for stopping displaying the reminder item 901, and a control 901h for joining a conference.

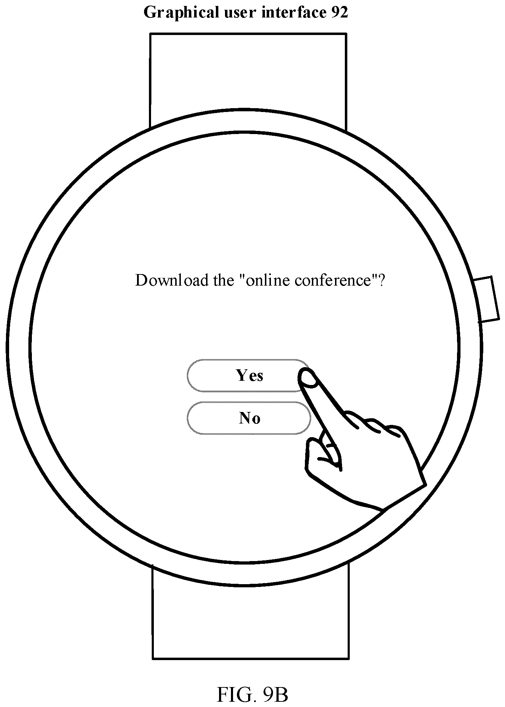

If an associated application of the schedule event is not installed on the electronic device 200, the electronic device 200 may display a user interface 9B shown in FIG. 9B, to prompt the user to download the associated application of the schedule event.

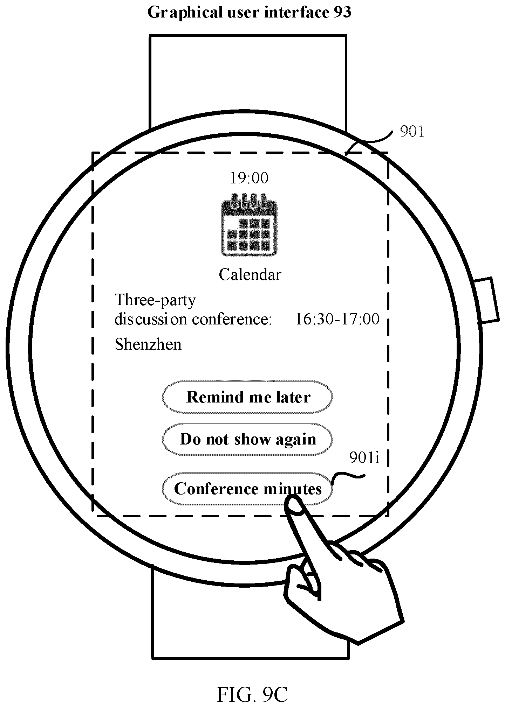

FIG. 9C shows a manner in which the electronic device 200 displays the reminder item of the schedule event at 19:00 on April 27 after a period of time and a schedule event status changes. Because an associated project of the online conference schedule event at 19:00 on April 27 is changed to an email, the control 901h in the reminder item 901 is changed. The control 901h that is displayed in the reminder item 703a and that is for joining the conference is changed to a control 901i for documenting conference minutes.

Subsequently, the electronic device 200 may perform a corresponding operation in response to a user operation detected on the control in the reminder item. For example, in response to the user operation received on the control 901h, the electronic device 200 may start the email and receive email content input by the user.

In some other embodiments, after receiving the schedule event information, the electronic device 200 may prompt the user to select a device to perform the associated operation of the schedule event.

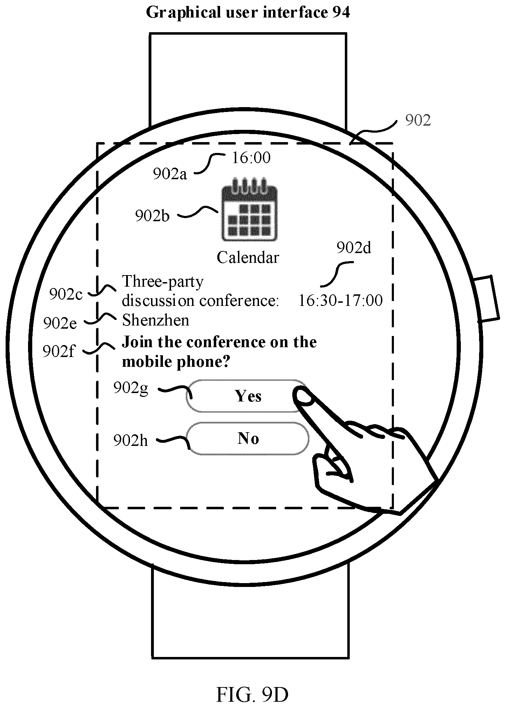

FIG. 9D shows a user interface 94 of the electronic device 200 to prompt the user to select the device.

The user interface 94 displays a current time indicator 902a, an identifier 902b of Calendar (calendar), a part or all of information of the schedule event, such as a name (three-party discussion conference) 902c of an online conference schedule event, start/end time (16:30-17:00) 902d, a place 902e, prompt information 902f, a control 902g, and a control 902h.

The prompt information 902f prompts the user to select the electronic device 100 or the electronic device 200 as the device for performing the corresponding operation.

The control 902g is used to monitor a user operation. The electronic device 200 may send an acknowledgment message to the electronic device 100 in response to the user operation, so that the electronic device 100 starts the online conference application and joins the conference.

The control 902h is used to monitor a user operation. In response to the user operation, the electronic device 200 directly starts the online conference application and joins the conference.

The electronic device 100 described in the foregoing UI embodiment obtains the schedule event information by using Calendar (calendar) and displays the reminder item of the schedule event, in embodiments of this application, the electronic device 100 may further obtain the schedule event information by using Alarm clock (clock) and display the reminder item of the schedule event.

A user interface related when the electronic device 100 performs the notification method provided in embodiments of this application by using Alarm clock (clock) is similar to the user interface related when the electronic device 100 performs the notification method by using Calendar (calendar). For details, refer to related descriptions. In other words, Calendar (calendar) mentioned in the foregoing UI embodiment may be replaced with Alarm clock.

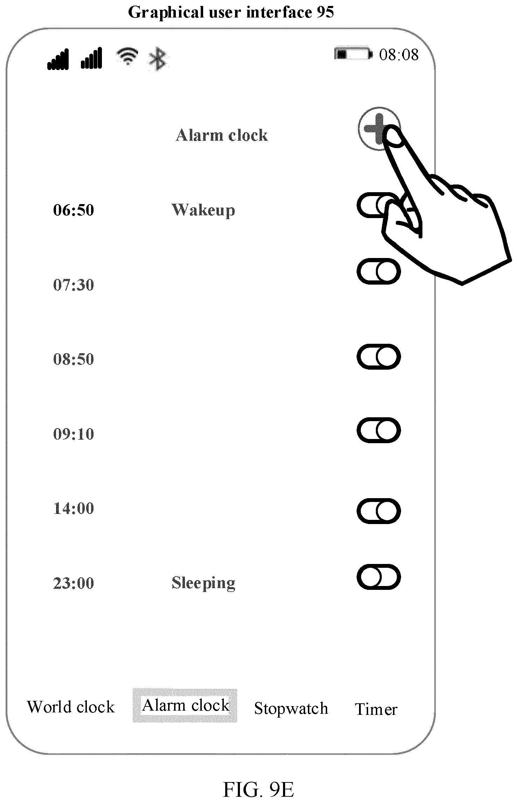

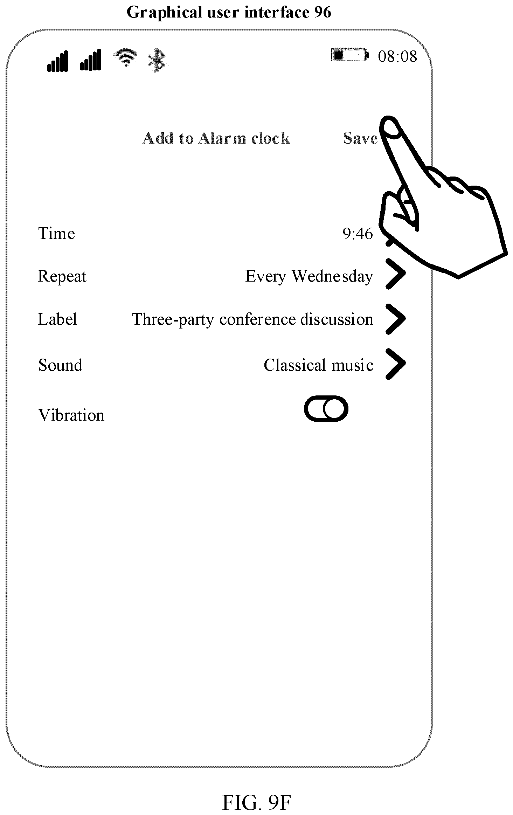

For example, the user may add the schedule event to Alarm clock on the electronic device 100, or the user may add the schedule event to Alarm clock by using Alarm clock or another application like a network video application, an online conference application, or a shopping application. In this way, the electronic device 100 can obtain the one or more pieces of schedule event information by using Alarm clock. FIG. 9E and FIG. 9F show examples of user interfaces when the electronic device 100 adds the schedule event by using Alarm clock. In FIG. 9E and FIG. 9F, the schedule event added to Alarm clock is the online conference schedule event, and the schedule event information of the schedule event may include time (April 27, 16:30) and a name (a three-party discussion conference).

The electronic device 100 may further display the reminder item of the schedule event by using Alarm clock (clock).

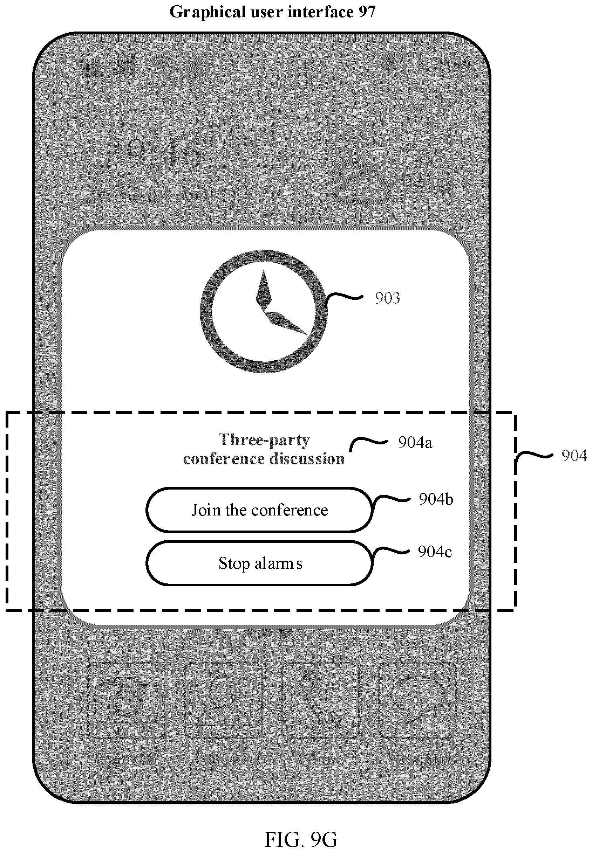

FIG. 9G shows a user interface 97 shown when the electronic device 100 displays the reminder item of the schedule event by using Alarm clock (clock) when reminder time of the schedule event arrives.

As shown in FIG. 9G, the user interface 97 displays an alarm clock icon 903 and the reminder item 904 of the schedule event. The reminder item 904 of the schedule event displays a part or all of information 904a of the schedule event, such as the name and execution time, and a control 904b for starting the online conference application of the schedule event.

When displaying the user interface 97 shown in FIG. 9G, the electronic device 100 may further output a sound signal, a vibration signal, or another signal at the same time. After the electronic device 100 detects a user operation performed on the control 904b, the electronic device 100 may start the online conferencing application and join the conference, and the electronic device 100 may further stop outputting the sound signal, the vibration signal, or the another signal.

Based on the electronic device described in FIG. 1 and FIG. 2 and the user interface provided in the foregoing UI embodiment, the following describes in detail the notification method provided in embodiments of this application.

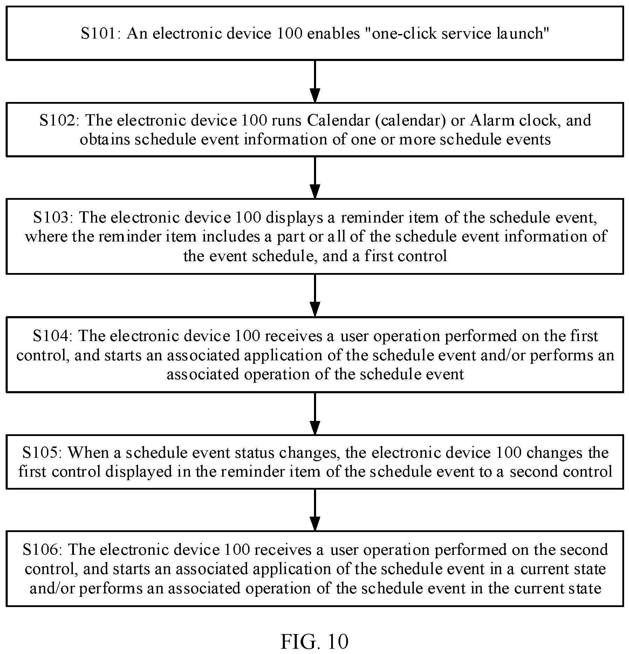

FIG. 10 is a flowchart of an example of a notification method according to an embodiment of this application.

As shown in FIG. 10, the method may include the following steps.

S101: The electronic device 100 enables "One-click service launch".

"One-click service launch" supports the electronic device 100 in displaying a part or all of schedule event information and a specific control on a display by using Calendar (calendar) or Alarm clock (clock). In addition, "One-click service launch" supports the electronic device 100 in starting an associated application of a schedule event after a user operation performed on the control is received, and performing an associated operation of the schedule event.

In some embodiments of this application, the electronic device 100 may enable "One-click service launch" by default.

In some other embodiments of this application, the electronic device 100 may enable "One-click service launch" in response to a received user operation (for example, a tap operation or a touch operation).

For example, refer to FIG. 3B, the operation for enabling "One-click service launch" may include the user operation performed on the control 309 in the user interface shown in FIG. 3B. This is not limited thereto. The operation for enabling "One-click service launch" may include a user operation received in another user interface, an operation input on a physical button, a speech instruction, or the like. This is not limited in embodiments of this application.

S102: The electronic device 100 runs Calendar (calendar) or Alarm clock (clock), and obtains schedule event information of one or more schedule events.

A sequence of S101 and S102 is not limited in embodiments of this application. In some embodiments, the electronic device 100 may first perform S102 and then perform S101.

In some embodiments, when generating a new schedule event, the electronic device 100 may directly obtain schedule event information of the schedule event by using Calendar (calendar) or Alarm clock (clock). In some other embodiments, the electronic device 100 may alternatively periodically obtain the schedule event information of the generated schedule event by using Calendar (calendar) or Alarm clock (clock).

The schedule event is a plan and arrangement for a specific time point or time period. The schedule event may also be referred to as an event, a transaction, a trip, or another name. This is not limited herein.

In this embodiment of this application, the schedule event information includes execution time of the schedule event and an associated project. In some embodiments, the schedule event information may further include one or more of the following: an identifier, a name, a type, duration, a place, a participant, a source application, a schedule event status, or reminder time of the schedule event.

The identifier of the schedule event uniquely indicates the schedule event, and may be implemented as an event ID.

The name specifies the type or subject of the schedule event.

The schedule event may include a plurality of types, such as a conference schedule event (including a voice conference and a video conference), a travel schedule event (including a local trip, a cross-city trip, and the like), a shopping schedule event, an online movie watching schedule event, an online learning schedule event, a medical treatment schedule event, a meal schedule event, a medicine taking schedule event, a party schedule event, a fitness schedule event, a work schedule event, an exam schedule event, an activity schedule event, a game schedule event, and a message reply schedule event. The type of the schedule event is related to the source application or the name of the schedule event. For example, when the source application of the schedule event is another application other than Calendar (calendar) or Alarm clock (clock), the type of the schedule event may be determined based on the source application. For example, a schedule event provided by a conference application is a conference schedule event, and a schedule event provided by a shopping application is a shopping schedule event. When the source application of the schedule event is Calendar (application), the type of the schedule event may be identified based on the name of the schedule event. For example, a schedule event whose name is "three-party discussion conference" is a conference schedule event.

Execution time of the schedule event may include a start moment and/or an end moment.

One or more places may be included, for example, a departure place and a destination, or an organization place may be included.

One or more participants may be included.

The source application is an application that provides the schedule event and generates the part or all of the information of the schedule event. After a user adds the schedule event to the electronic device 100 by using the application, the application is the source application of the schedule event. In this embodiment of this application, the source application may be Calendar (calendar) or Alarm clock (clock), or may be another application like a shopping application, a network video application, a ticket booking application, or an online conference application.

The schedule event status may include: before the schedule event is executed, during the schedule event is executed, after the schedule event is executed, and the like. In some embodiments, the electronic device 100 may determine the schedule event status by monitoring a running status of the source application. For example, the electronic device 100 determines, by monitoring a running status of a conference application, whether the user is currently in a conference, and determines, by using a running status of a network video application, whether the user watches a movie. In some other embodiments, the electronic device 100 may determine the schedule event status based on place information, time information, and the like, for example, determine, based on the place information, whether the user travels from a place A to a place B. It can be learned that the schedule event status may change continuously with a user operation and time.

The associated project includes the associated application and/or the associated operation.

The associated application may include an application that the user wants to trigger the electronic device to start before, when, or after executing a type of schedule event or a schedule event. There may be one or more associated applications. In some embodiments, because the user may want to start different applications in different schedule event statuses, one schedule event may correspond to different associated applications in different schedule event statuses. This can meet an actual requirement of the user. In some embodiments, because the user may want to start a plurality of applications in a same schedule event status, one schedule event may correspond to a plurality of associated applications in some schedule event statuses. This can meet diversified requirements of the user. For example, associated applications corresponding to a conference schedule event whose execution status is before a conference may include an online conference application and an email. For another example, associated applications corresponding to a conference schedule event whose execution status is after a conference may include an email application and an input method application.

In this embodiment of this application, the associated application may be the source application, or may be a source application or another application specified by the user, for example, a network video application, an online conference application, or a shopping application.

The associated operation may include an operation that the user wants to trigger the electronic device to perform before, when, or after executing the type of schedule event or the schedule event. There may be one or more associated operations. In some embodiments, because the user may want to perform different operations in the schedule event status, one schedule event may correspond to different associated operations in different schedule event statuses. This can meet the actual requirement of the user. In some embodiments, because the user may want to perform a plurality of operations in a same schedule event status, one schedule event may correspond to a plurality of associated operations in some schedule event statuses. This can meet the diversified requirements of the user.

The associated operations include but are not limited to online video playing, joining a conference, navigation, recording conference minutes, recording a video review, making a call, booking an air ticket, booking a hotel, booking a bus ticket, shopping, booking take-out, translation, photographing, video recording, scanning, payment, and listening to music.

Each of associated applications or associated operations of different types of schedule events may be preset by the user, or may be predefined and stored in the electronic device 100 by a developer of the source application, Calendar (calendar), or Alarm clock (clock). For example, refer to FIG. 6B. The user autonomously sets the associated application of the travel schedule event by using the item 606.

The associated application allows the electronic device to perform the associated operation. In some embodiments, the electronic device may determine, based on a relationship between the associated application and the associated operation, the associated operation based on the associated application, or determine the associated application based on the associated operation.

The reminder time is a time period in which the electronic device reminds the user of the schedule event, and includes a start moment and/or an end moment. The electronic device may start reminding the user of the schedule event at the start time of the reminder time until the end time of the reminder time, unless the user chooses not to remind the user of the schedule event again.

The reminder time may be set by the user, or may be set by the electronic device 100 autonomously. For example, refer to FIG. 5B. The user autonomously sets the reminder time of the online conference schedule event by using the item 512.

When the electronic device 100 reminds the schedule event in different manners (for example, a notification bar, a desktop card, or a leftmost screen), corresponding reminder time may be different. For example, the electronic device 100 may set the reminder time of reminding the schedule event in the desktop card to 30 minutes before the schedule event starts to 30 minutes after the schedule event ends, and set the reminder time of reminding the schedule event in the smart card to 10 minutes before the schedule event starts to 10 minutes after the schedule event ends.

Specifically, when S102 is performed, in some embodiments, the user may add a schedule event by using an application installed on the electronic device 100, and Calendar (calendar) or Alarm clock (clock) on the electronic device 100 may obtain, from the application, a part or all of schedule event information of the schedule event added by the user. In other words, after the user inputs or selects a part or all of schedule event information in the application to add the schedule event, the application may transfer the part or all of the schedule event information to Calendar (calendar) or Alarm clock (clock). The application is referred to as the source application subsequently. The source application may be Calendar (calendar) or Alarm clock (clock), or may be another application like a shopping application, a network video application, a ticket booking application, or an online conference application. In addition, the electronic device 100 may further determine, according to a preset rule, other schedule event information other than the information input or selected by the user.

In some embodiments, after the user inputs or selects the part or all of schedule event information in the application to add the schedule event, the electronic device 100 may further send the schedule event information of the schedule event to a server that provides a service for the source application.

For example, FIG. 4A to FIG. 4E, FIG. 5A to FIG. 5D, and FIG. 6A and FIG. 6B show several manners of adding the schedule event by the user.

As shown in FIG. 4A to FIG. 4E, the user adds the movie watching schedule event by using the network video application.

As shown in FIG. 5A to FIG. 5D, the user adds the online conference schedule event by using the online conference application.

As shown in FIG. 6A and FIG. 6B, the user adds the travel schedule event by using Calendar (calendar).

As shown in FIG. 9E and FIG. 9F, the user adds the online conference schedule event by using Alarm clock (clock).

Schedule event information of several schedule events is listed below as an example.

**Table 1**

| Identifier of a schedule event | Name | Time | Dura tion | Place | Partic ipant | Source applicati on | Schedule event status | Associated project | | Reminder time |
|---|---|---|---|---|---|---|---|---|---|---|
| | | | | | | | | Associated application | Associated operation | |
| event ID1 | Launc h of a movie A | 16:00 April 27 | | | | Network video applicati on | Before watching | Network video application | Playing the movie A | Start at 16:00 on April 27 in a notification bar/desktop card/smart card/leftmo st screen |
| | | | | | | | After watching | Movie review application | Writing a movie review | |
| event ID2 | Three-party discus sion confer ence | 16:30 April 27 | 30 minu tes | Shenz hen | User A, user B, and user C | Online conferen ce applicati on | Before conferenc e | Online conference application | Joining the conference | Start at 16:00 on April 27 in a notification bar/desktop card/leftmo st screen/pop-up window |
| | | | | | | | After conferenc e | Email | Documenti ng conference minutes | |
| event ID3 | Watch ing a movie | 17:10 April 27 | 100 minu tes | XX buildi ng | | Calendar (calenda r) | Before watching | Maps | Navigation | Start at 16:00 on April 27 in a desktop card/leftmo st screen |
| | | | | | | | After watching | Movie review application | Writing a movie review | |
| event ID4 | Take the flight CA45 55 | 21:10 April 27 | | Beijin g, and Shang hai | | Ticket booking applicati on | | Maps | | |

It should be noted that one schedule event can have only one schedule event status at one moment.

In some embodiments, the source application may transfer the part or all of the schedule event information to Calendar (calendar) or Alarm clock (clock) in a form of an event (event) table. For fields included in the event table and corresponding meanings, refer to an example in Table 2.

**Table 2**

| Field name | Field type | Meaning |
|---|---|---|
| hwext_type | int | A type of a schedule event |
| hwext_app_uri | text | Associated application |
| hwext_action | text | Associated operation |
| hwext_method | int | Manner of starting the associated application and performing the associated operation |
| hwext_status | int | Schedule event status |
| hwext_description | text | Name of a control in a reminder item |

The name of the control in the reminder item included in the hwext_description field in Table 2 may indicate the associated application or the associated operation.

S 103: The electronic device 100 displays a reminder item of the schedule event, where the reminder item includes the part or all of schedule event information of the schedule event and a first control, and the first control is used to start the associated application of the schedule event, and/or is used to perform the associated operation of the schedule event.

In this embodiment of this application, after message notification permission of Calendar (calendar) or Alarm clock (clock) is enabled, the electronic device 100 may display the reminder item of the schedule event by using Calendar (calendar) or Alarm clock (clock). The message notification permission of Calendar (calendar) or Alarm clock (clock) may be enabled by the electronic device by default, or may be actively enabled by the user, for example, may be enabled by the user in an interface that is provided by a settings application and that is used to set various functions of Calendar.

In some embodiments, if a same schedule event corresponds to a same and constant associated application and/or associated operation, the first control is used to start the associated application and/or is used to perform the associated operation.

In some other embodiments, if a same schedule event in different statuses corresponds to different associated applications and/or associated operations, the first control is used to start an associated application of the schedule event in a status, and/or is used to perform an associated operation of the schedule event in a status.

The first control may be implemented as, for example, a text, a button, or an icon like an icon of the associated application. This is not limited herein.

The electronic device 100 may display the reminder item of the schedule event in a plurality of manners, and the manners are separately described below.
1. The electronic device 100 displays the reminder item of the schedule event in a user interface of Calendar (calendar) or Alarm clock (clock).

The electronic device 100 may detect a user operation performed on an icon 306a of Calendar (calendar) on a desktop (for example, the user interface 31 shown in FIG. 3A), and display a home page of Calendar (calendar). The home page of Calendar (calendar) usually displays a complete calendar of a current month and marks a date of a current day. When the user selects a date on the home page of Calendar (calendar), the electronic device 100 displays the reminder item of the schedule event whose execution time is on the date.

For example, FIG. 7A shows the example of displaying reminder items of four schedule events by the electronic device 100 that are executed on April 27. For details, refer to the foregoing detailed descriptions about FIG. 7A.

The first controls may include the control 701a-4, the control 701b-4, the control 701c-4, the control 701d-5, and the like in FIG. 7A.

The electronic device 100 may further display, on the display when the reminder time arrives, the user interface provided by Alarm clock (clock). For example, FIG. 9G shows the user interface provided by Alarm clock (clock). The user interface may include the reminder item 904, where the control 904b may be the first control. When displaying the reminder item of the schedule event by using Alarm clock (clock), the electronic device 100 may further synchronously output a sound signal, a vibration signal, or the like, to remind the user.

2. The electronic device 100 displays the reminder item of the schedule event in a notification bar, a home screen card, a smart card, or a leftmost screen.

Specifically, Calendar (calendar) or Alarm clock (clock) on the electronic device 100 may send the obtained schedule event information to a notification bar application, a desktop card application, a smart card application, and a desktop application, to display the reminder item of the schedule event in the notification bar, the desktop card, the smart card, or the leftmost screen.

The electronic device 100 may display, in the notification bar, the reminder item of the schedule event whose reminder time includes the current time. The reminder time is reminder time, of the schedule event, prompted by the schedule event in the notification bar. For example, FIG. 7C shows the example of displaying the reminder item of the schedule event by the electronic device 100 in the notification bar. For details, refer to the foregoing detailed descriptions about FIG. 7C. The first controls may include the control 703a-8 and the control 703b-8 in FIG. 7C.

The electronic device 100 may display, in the desktop card, the reminder item of the schedule event whose reminder time includes the current time. The reminder time is reminder time, of the schedule event, prompted by the schedule event in the desktop card. For example, FIG. 7F shows the example of displaying the reminder item of the schedule event by the electronic device 100 in the desktop card. For details, refer to the foregoing detailed descriptions about FIG. 7F. The first controls may include the control 704a-1, the control 704b-1, and the control 704c-1 in FIG. 7F.

The electronic device 100 may display, in the smart card, the reminder item of the schedule event whose reminder time includes the current time. The reminder time is reminder time, of the schedule event, prompted by the schedule event in the smart card. For example, FIG. 7H shows the example of displaying the reminder item of the schedule event by the electronic device 100 in the smart card. For details, refer to the foregoing detailed descriptions about FIG. 7H. The first control may include the control 705a-1 in FIG. 7H.

The electronic device 100 may display, on the leftmost screen, the reminder item of the schedule event whose reminder time includes the current time. The reminder time is reminder time, of the schedule event, prompted by the schedule event on the leftmost screen. For example, FIG. 7J shows the example of displaying the reminder item of the schedule event by the electronic device 100 on the leftmost screen. For details, refer to the foregoing detailed descriptions about FIG. 7J. The first controls may include the controls 706a-1, 706b-1, and 706c-1 in FIG. 7J.

3. The electronic device 100 displays the reminder item of the schedule event in a pop-up window.

Specifically, after obtaining the schedule event information, Calendar (calendar) or Alarm clock (clock) on the electronic device 100 may directly display, in the pop-up window, the reminder item of the schedule event whose reminder time includes the current time. The pop-up window may be provided by Calendar (calendar) or Alarm clock (clock). The reminder time is reminder time, of the schedule event, prompted by the schedule event in the pop-up window. For example, FIG. 7L shows the example of displaying the reminder item of the schedule event by the electronic device 100 in the pop-up window. For details, refer to the foregoing detailed descriptions about FIG. 7L. The first control may include the control 707b in FIG. 7L.

In this embodiment of this application, the part or all of the schedule event information of the schedule event and the first control in the reminder item may be displayed at the same time, or may be displayed at different time. For example, the electronic device 100 may first display the part or all of schedule event information of the schedule event, and then display the first control in the reminder item.

S104: The electronic device 100 receives a user operation performed on the first control, and starts the associated application of the schedule event and/or performs the associated operation of the schedule event.

In some embodiments, after receiving the user operation performed on the first control, the electronic device 100 may first start the associated application of the schedule event, and then perform the associated operation of the schedule event in response to a subsequently received user operation. For example, after receiving an operation detected on the first control in a travel schedule event, the electronic device may first start a map application and display a home page of the map application, and then receive a destination address input by the user and start navigation.

In some other embodiments, after receiving the user operation performed on the first control, the electronic device 100 may directly start the associated application of the schedule event, and perform the associated operation of the schedule event. The electronic device 100 may perform the associated operation of the schedule event based on the schedule event information obtained in S 101.

The electronic device may start one or more associated applications in response to the user operation performed on the first control.

For example, refer to FIG. 8A. In response to the user operation received on the first control, for example, the control 701a-4 in FIG. 7A, the control 703b-8 in FIG. 7C, the control 704a-1 in FIG. 7F, the control 705a-1 in FIG. 7H, or the control 706a-1 in FIG. 7J, the electronic device 100 directly starts the network video application and plays the movie A.

Refer to FIG. 8B. In response to the user operation received on the first control like the control 701b-4, the control 703a-9 in FIG. 7C, the control 704b-1 in FIG. 7F, the control 706b-1 in FIG. 7J, or the control 707c in FIG. 7L, the electronic device 100 directly starts the online conference application and joins the conference.

FIG. 8C to FIG. 8I show similar user interfaces displayed when the electronic device directly performs the associated operation. For details, refer to the foregoing related descriptions. Details are not described herein again. As shown in FIG. 8E, the electronic device 100 may fill in a recipient email, an email subject, and sender information of the email in advance based on the schedule event information. Refer to FIG. 8F, the electronic device 100 may jump to a movie review page of the corresponding movie in advance based on the schedule event information.

In the steps S101 to S104, the user can be reminded of the to-be-executed schedule event by using the schedule event information in the reminder item, and can directly start the associated application of the schedule event and perform the corresponding operation by using the first control in the reminder item. The user does not need to switch between the plurality of applications, which is convenient, and can quickly and conveniently meet the actual requirement of the user and improve experience of using the electronic device by the user.

Optional step S105: When the schedule event status of the schedule event changes, the electronic device 100 changes the first control in the displayed reminder item of the schedule event to a second control, where the second control is used to start an associated application of the schedule event in a current state, and/or is used to perform an associated operation of the schedule event in the current state.

In some embodiments, the electronic device 100 may determine the schedule event status by monitoring a running status of the source application. For example, the electronic device 100 determines, by monitoring a running status of a conference application, whether the user is currently in a conference, and determines, by using a running status of a network video application, whether the user watches a movie. In some other embodiments, the electronic device 100 may determine the schedule event status based on place information, time information, and the like, for example, determine, based on the place information, whether the user travels from a place A to a place B.

In some embodiments, if the same schedule event has different associated applications and/or associated operations in different statuses, the method shown in FIG. 10 may include S 105.

The second control in S 105 is used to start the associated application of the schedule event in the current state and/or is used to perform the associated operation of the schedule event in the current state.

A specific implementation of S 105 is similar to a specific implementation of S 103, and a difference lies in that the first control in the reminder item displayed by the electronic device is changed to the second control.

FIG. 7B shows the example of the reminder items of four schedule events that are displayed by the electronic device 100 after the schedule event statuses change and that are executed on April 27. For details, refer to the foregoing detailed descriptions about FIG. 7B. The second controls may include the control 701b-6 and the control 701c-6 in FIG. 7B.

FIG. 7E shows the example of the reminder item of the schedule event displayed by the electronic device 100 in the notification bar after the schedule event status changes. For details, refer to the foregoing detailed descriptions about FIG. 7E. The second controls may include the control 703a-10 and the control 703b-10 in FIG. 7E.

FIG. 7G shows the example of the reminder item of the schedule event displayed by the electronic device 100 in the desktop card after the schedule event status changes. For details, refer to the foregoing detailed descriptions about FIG. 7G. The second controls may include the control 704b-2 and the control 704c-2 in FIG. 7G.

FIG. 7I shows the example of the reminder item of the schedule event displayed by the electronic device 100 in the smart card after the schedule event status changes. For details, refer to the foregoing detailed descriptions about FIG. 7I. The second control may include the control 705a-2 in FIG. 7I.

FIG. 7K shows the example of the reminder item of the schedule event displayed by the electronic device 100 on the leftmost screen after the schedule event status changes. For details, refer to the foregoing detailed descriptions about FIG. 7K. The second control may include the control 706b-2 and the control 706c-2 in FIG. 7K.

FIG. 7M shows the example of the reminder item of the schedule event displayed by the electronic device 100 in the pop-up window after the schedule event status changes. For details, refer to the foregoing detailed descriptions about FIG. 7M. The second control may include the control 707e in FIG. 7M.

Optional step S 106: The electronic device 100 receives a user operation performed on the second control, and starts the associated application of the schedule event in the current state and/or performs the associated operation of the schedule event in the current state.

A specific implementation of S 106 is similar to a specific implementation of S 104. For details, refer to related descriptions in S 104. Details are not described herein again.

In S105 and S 106, the control displayed in the reminder item may be refreshed based on the actual status of the schedule event. This quickly and conveniently starts different applications and perform different operations at different time, and meets the actual requirement of the user.

In the method embodiment shown in FIG. 10

In S104, the associated application, of the schedule event, started by the electronic device 100 may be referred to as a first associated application, and the associated operation, of the schedule event, performed by the electronic device 100 may be referred to as a first associated operation.

The user operation performed on the first control in S 104 may be referred to as a first operation.

In S106, the associated application, of the schedule event, started by the electronic device 100 may be referred to as a second associated application, and the associated operation, of the schedule event, performed by the electronic device 100 may be referred to as a second associated operation.

The user operation performed on the second control in S 106 may be referred to as a second operation.

The user interface 71 shown in FIG. 7A and FIG. 7B may be referred to as a first user interface, and the currently selected date in the user interface 71 may be referred to as a first date.

The user interfaces shown in FIG. 4A to FIG. 4E, FIG. 5A and FIG. 5B, and FIG. 6A and FIG. 6B each may be referred to as a second user interface.

"One-click service launch" may also be referred to as a first service, and the operation for starting the first service may be referred to as a third operation. The third operation may include, for example, the user operation performed on the control 309 in the user interface shown in FIG. 3B.

In some embodiments of this application, the electronic device 100 may further establish a communication connection to another electronic device like an electronic device 200. In some embodiments, a short-range connection may be established between the electronic device 100 and another electronic device by using BT or a WLAN like Wi-Fi P2P, NFC, or ZigBee. In some other embodiments, the electronic device 100 and another electronic device may further establish a remote connection by logging in to a same account. For example, the electronic device 100 and an electronic device 200 may log in to a same Huawei account, and connect to each other by using a Huawei server.

After obtaining the schedule event information in S101, the electronic device 100 may send the obtained schedule event information to the another connected electronic device, for example, the electronic device 200. The another electronic device like the electronic device 200 may be selected by the electronic device 100 by default, or may be selected by the user.

In some embodiments, the electronic device 100 may send the schedule event information of the schedule event to the another electronic device when the reminder time of the schedule event arrives. In some other embodiments, after obtaining the schedule event information, the electronic device 100 may directly send the schedule event information to the another electronic device.

After receiving the schedule event information, the another electronic device like the electronic device 200 may display the reminder item of the schedule event on a display. A manner and specific content of the reminder item displayed by the electronic device 200 are similar to a manner and specific content of the reminder item displayed by the electronic device 100. For details, refer to S103 and S105 in the method embodiment shown in FIG. 10. For example, the control 901h in the reminder item 901 in the user interface 91 shown in FIG. 9Ais the first control, and the control 901i in the user interface 91 shown in FIG. 9C is the second control.

In some embodiments, after the electronic device 200 displays the reminder item of the schedule event on the display, if the user operation performed on the first control or the second control is received, and the associated application of the schedule event is not installed on the electronic device 200, the electronic device 200 may prompt the user to download the associated application. Refer to the user interface 92 shown in FIG. 9B, after the associated application is installed, the associated application is started and the associated operation is performed. If the associated application of the schedule event has been installed on the electronic device 200, the electronic device 200 may directly start the associated application of the schedule event and perform the associated operation of the schedule event, or notify another device to start a distributed associated application of the schedule event and perform the associated operation of the schedule event.

In some embodiments, the electronic device 100 may select, in connected electronic devices in advance, an electronic device on which the associated application of the schedule event has been installed, and send the schedule event information to the electronic device. In this way, after the user operation performed by the user on the first control or the second control is received, the associated application of the schedule event can be directly started or the associated operation of the schedule event can be directly performed, which is convenient, and user experience is higher.

In a cross-device scenario described above, according to the notification method provided in this application, the user can be reminded of the to-be-executed schedule event across devices, and can directly start the associated application of the schedule event and perform the corresponding operation across devices, which is convenient, and can quickly and conveniently meet an actual requirement of the user and improve experience of using the electronic device by the user.

In some embodiments, after receiving the schedule event information, the electronic device 200 may further prompt the user to select the electronic device 100 or the electronic device 200 to start the associated application of the schedule event and perform the corresponding operation. After the user selects the device, the corresponding device may start the associated application of the schedule event and perform the corresponding operation. As shown in FIG. 9D, the electronic device 200 may send the acknowledgment message to the electronic device 100 in response to the user operation received on the control 902g, so that the electronic device 100 starts the online conferencing application and joins the conference. The control 902g may be referred to as the first control.

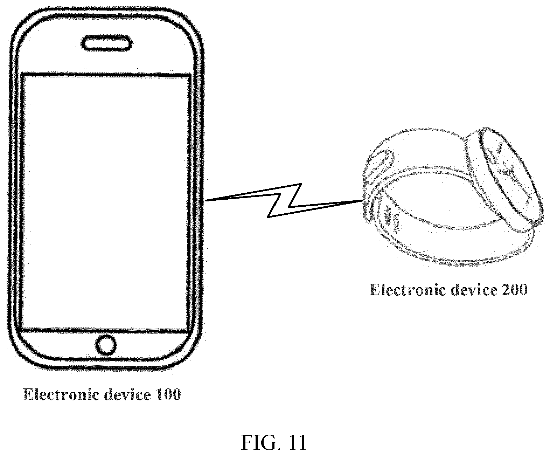

Refer to FIG. 11. An embodiment of this application further provides a communication system 10. FIG. 11 shows a structure of the communication system 10.

As shown in FIG. 11, the communication system includes an electronic device 100 and an electronic device 200.

A communication connection is established between the electronic device 100 and the electronic device 200. For details, refer to the foregoing related descriptions.

Calendar (calendar) or Alarm clock (clock) is installed on the electronic device 100. Calendar (calendar) or Alarm clock (clock) may be installed on the electronic device 200, or Calendar (calendar) or Alarm clock (clock) may not be installed on the electronic device 200. This is not limited herein.

A specific type of the electronic device 200 is not limited in embodiments of this application. For example, the electronic device 200 may include a mobile phone, and may further include a tablet computer, a desktop computer, a laptop computer, a handheld computer, a notebook computer, a smart screen, a wearable device, an augmented reality (augmented reality, AR) device, a virtual reality (virtual reality, VR) device, an artificial intelligence (artificial intelligence, AI) device, telematics, a smart headset, and a game console, and may further include an internet of things (internet of things, IOT) device or a smart home device like a smart water heater, a smart lamp, a smart air conditioner, or a camera. This is not limited thereto. The electronic device 200 may further include a non-portable terminal device like a laptop (laptop) computer having a touch-sensitive surface or a touch panel, or a desktop computer having a touch-sensitive surface or a touch panel.

The electronic device 100 is configured to send obtained schedule event information to the electronic device 200 after obtaining the schedule event information. For how the electronic device 100 obtains the schedule event information, refer to related descriptions of S 102 in the method shown in FIG. 10. The electronic device 200 may be a device selected by the electronic device 100 by default, or may be a device selected by a user.

In some embodiments, the electronic device 100 is further configured to display a reminder item of the schedule event on a display by using Calendar (calendar) or Alarm clock (clock) after obtaining the schedule event information. The electronic device 100 is further configured to: after receiving a user operation performed on a first control or a second control in the reminder item, start an associated application of the schedule event and perform an associated operation of the schedule event; or notify another device like the electronic device 200 to start an associated application of the schedule event and perform an associated operation of the schedule event. For example, after receiving the user operation performed on the first control 701c-4 in FIG. 7A, the electronic device 100 (for example, a smartphone) may notify a smart screen or a large screen to start the online conference application and join the conference.

In some embodiments, the electronic device 200 is configured to display the reminder item of the schedule event on the display after receiving the schedule event information.

In some embodiments, the electronic device 200 is further configured to: after displaying the reminder item of the schedule event on the display, and receiving the user operation performed on the first control or the second control in the reminder item, prompt the user to download the associated application, or directly start the associated application of the schedule event and perform the associated operation of the schedule event.

In some embodiments, the electronic device 200 is further configured to: after displaying the reminder item of the schedule event on the display, and receiving the user operation performed on the first control or the second control in the reminder item, trigger another electronic device, like the electronic device 100, to start the associated application of the schedule event and perform the corresponding operation. For example, refer to FIG. 9D, after receiving the user operation performed on the first control, namely, the control 902g, the electronic device 200 may trigger the another device, like the electronic device 100, to start the associated application and perform the associated operation. The another device may be referred to as a third device.

In the communication system 10, the electronic device 100 may be referred to as a first device, and the electronic device 200 may be referred to as a second device.

The implementations of this application may be randomly combined, to achieve different technical effect.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to this application are all or partially generated. The computer may be a general purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, like a ROM, a random access memory RAM, a magnetic disk, or an optical disc.

In summary, what is described above is merely embodiments of the technical solutions of this application, but is not intended to limit the protection scope of this application. Any modification, equivalent replacement, and improvement made in accordance with the disclosure of this application shall be included in the protection scope of this application.

## Claims

1. A notification method, wherein the method is applied to an electronic device having a display, and the method comprises:
obtaining, by the electronic device, schedule event information of one or more schedule events in a process of running Calendar or Alarm clock, wherein the schedule event information comprises execution time of the schedule event and further comprises a first associated application and/or a first associated operation, and the first associated application or the first associated operation is preset;
displaying, by the electronic device, a reminder item of the schedule event on the display, wherein the reminder item comprises a part or all of the schedule event information and a first control;
receiving, by the electronic device, a first operation performed on the first control; and
in response to the first operation, running, by the electronic device, the first associated application, and performing the first associated operation.

2. The method according to claim 1, wherein a schedule event status is a first state, and the schedule event information further comprises a second associated application and/or a second associated operation; and
after the displaying, by the electronic device, a reminder item of the schedule event on the display, the method further comprises:
when detecting that the schedule event status is changed from the first state to a second state, changing, by the electronic device, the first control in the reminder item to a second control;
receiving, by the electronic device, a second operation performed on the second control; and
in response to the second operation, running, by the electronic device, the second associated application, and performing the second associated operation.

3. The method according to claim 1 or 2, wherein the displaying, by the electronic device, a reminder item of the schedule event on the display specifically comprises:
displaying, by the electronic device on the display, a first user interface provided by Calendar, wherein the first user interface displays a calendar and the reminder item of the schedule event whose execution time is on a first date.

4. The method according to claim 1 or 2, wherein the displaying, by the electronic device, a reminder item of the schedule event on the display specifically comprises:
displaying, by the electronic device, the reminder item of the schedule event in any one of a notification bar, a card, a leftmost screen, or a pop-up window on the display.

5. The method according to claim 4, wherein when reminder time arrives, the electronic device displays the reminder item of the schedule event in any one of the notification bar, the card, the leftmost screen, or the pop-up window on the display.

6. The method according to claim 4 or 5, wherein the electronic device displays the reminder item of the schedule event in any one of the notification bar, the card, the leftmost screen, or the pop-up window on the display in split screen, in full screen, or in a floating window.

7. The method according to any one of claims 1 to 6, wherein the displaying, by the electronic device, a reminder item of the schedule event on the display, wherein the reminder item comprises a part or all of the schedule event information and a first control specifically comprises:
first displaying, by the electronic device, the part or all of the schedule event information on the display, and then displaying the first control on the display.

8. The method according to any one of claims 1 to 7, wherein the electronic device obtains the schedule event information of the one or more schedule events in the process of running Alarm clock; and
when the displaying, by the electronic device, a reminder item of the schedule event on the display, the method further comprises:
outputting, by the electronic device, a sound signal or a vibration signal.

9. The method according to any one of claims 1 to 8, wherein before the obtaining, by the electronic device, schedule event information of one or more schedule events in a process of running Calendar or Alarm clock, the method further comprises:
displaying, by the electronic device on the display, a second user interface provided by a source application; and
receiving, by the electronic device, the part or all of the input schedule event information in the second user interface.

10. The method according to any one of claims 1 to 9, wherein before the displaying, by the electronic device, a reminder item of the schedule event on the display, the method further comprises:
receiving, by the electronic device, a third operation for enabling a first service; and
enabling, by the electronic device, the first service in response to the third operation, wherein the first service is used by the electronic device to run the first associated application and perform the first associated operation by using the reminder item.

11. The method according to any one of claims 1 to 10, wherein the schedule event information further comprises one or more of the following: an identifier, a name, a type, duration, a place, a participant, the source application, the schedule event status, or the reminder time of the schedule event.

12. The method according to claim 11, wherein
the schedule event status comprises: before the schedule event, during the schedule event, and after the schedule event.

13. The method according to any one of claims 1 to 12, wherein
the in response to the first operation, running, by the electronic device, the first associated application, and performing the first associated operation specifically comprises:
in response to the first operation, displaying, by the electronic device in split screen or in a floating window, user interfaces provided by a plurality of first associated applications, and performing the first associated operation.

14. An electronic device, comprising a display, a memory, and one or more processors, wherein the display and the memory are coupled to the one or more processors, the memory is configured to store computer program code, the computer program code comprises computer instructions, and the one or more processors invoke the computer instructions to enable the electronic device to perform the following operations:
obtaining schedule event information of one or more schedule events in a process of running Calendar or Alarm clock, wherein the schedule event information comprises execution time of the schedule event and further comprises a first associated application and/or a first associated operation, and the first associated application or the first associated operation is preset;
displaying a reminder item of the schedule event on the display, wherein the reminder item comprises a part or all of the schedule event information and a first control;
receiving a first operation performed on the first control; and
in response to the first operation, running the first associated application, and performing the first associated operation.

15. The electronic device according to claim 14, wherein a schedule event status is a first state, the schedule event information further comprises a second associated application and/or a second associated operation, and the one or more processors are further configured to invoke the computer instructions to enable the electronic device to perform the following operations:
after displaying a reminder item of the schedule event on the display, detecting that the schedule event status is changed from the first state to a second state, and replacing the first control in the reminder item with a second control;
receiving a second operation performed on the second control; and
in response to the second operation, running the second associated application, and performing the second associated operation.

16. The electronic device according to claim 14 or 15, wherein the one or more processors are specifically configured to invoke the computer instructions to enable the electronic device to perform the following operation:
displaying, on the display, a first user interface provided by Calendar, wherein the first user interface displays a calendar and the reminder item of the schedule event whose execution time is on a first date.

17. The electronic device according to claim 14 or 15, wherein the one or more processors are specifically configured to invoke the computer instructions to enable the electronic device to perform the following operation:
displaying the reminder item of the schedule event in any one of a notification bar, a card, a leftmost screen, or a pop-up window on the display.

18. The electronic device according to claim 17, wherein the one or more processors are specifically configured to invoke the computer instructions to enable the electronic device to perform the following operation:
when reminder time arrives, displaying the reminder item of the schedule event in any one of the notification bar, the card, the leftmost screen, or the pop-up window on the display.

19. The electronic device according to claim 17 or 18, wherein the one or more processors are specifically configured to invoke the computer instructions to enable the electronic device to perform the following operation:
displaying the reminder item of the schedule event in any one of the notification bar, the card, the leftmost screen, or the pop-up window on the display in split screen, in full screen, or in a floating window.

20. The electronic device according to any one of claims 14 to 19, wherein the one or more processors are specifically configured to invoke the computer instructions to enable the electronic device to perform the following operation:
first displaying the part or all of the schedule event information on the display, and then displaying the first control on the display.

21. The electronic device according to any one of claims 14 to 20, wherein the electronic device obtains the schedule event information of the one or more schedule events in the process of running Alarm clock; and the one or more processors are further configured to invoke the computer instructions to enable the electronic device to perform the following operation:
outputting a sound signal or a vibration signal when the reminder item of the schedule event is displayed on the display.

22. The electronic device according to any one of claims 14 to 21, wherein the one or more processors are further configured to invoke the computer instructions to enable the electronic device to perform the following operations:
in the process of running Calendar or Alarm clock, before obtaining schedule event information of one or more schedule events, displaying, on the display, a second user interface provided by a source application; and
receiving the part or all of the input schedule event information in the second user interface.

23. The electronic device according to any one of claims 14 to 22, wherein before the one or more processors are further configured to invoke the computer instructions to enable the electronic device to perform the following step: displaying a reminder item of the schedule event on the display, the method further comprises:
receiving a third operation for enabling a first service; and
enabling the first service in response to the third operation, wherein the first service is used by the electronic device to run the first associated application and perform the first associated operation by using the reminder item.

24. The electronic device according to any one of claims 14 to 23, wherein the schedule event information further comprises one or more of the following: an identifier, a name, a type, duration, a place, a participant, the source application, the schedule event status, or the reminder time of the schedule event.

25. The electronic device according to any one of claims 14 to 24, wherein the schedule event status comprises: before the schedule event, during the schedule event, and after the schedule event.

26. The electronic device according to any one of claims 14 to 25, wherein
that in response to the first operation, the electronic device runs the first associated application, and performs the first associated operation specifically comprises:
in response to the first operation, the electronic device displays, in split screen or in a floating window, user interfaces provided by a plurality of first associated applications, and performs the first associated operation.

27. A computer-readable storage medium, comprising instructions, wherein when the instructions are run on an electronic device, the electronic device is enabled to perform the method according to any one of claims 1 to 13.

28. A computer program product, wherein when the computer program product runs on a computer, the computer is enabled to perform the method according to any one of claims 1 to 13.
